# EUROPÄISCHE PATENTSCHRIFT

(11) **EP 3 213 178 B1**
(45) Veröffentlichungstag und Bekanntmachung des Hinweises auf die Patenterteilung: **10.04.2024**
(21) Anmeldenummer: 15794865.4
(22) Anmeldetag: 06.11.2015
(51) Int. Cl.: G06F 3/04883, G07C 9/33, G07F 19/00, G09B 21/00, G06F 21/83, G06F 21/31, G07F 7/10

(54) **BENUTZERSCHNITTSTELLE UND VERFAHREN ZUR GESCHÜTZTEN EINGABE VON ZEICHEN**
USER INTERFACE AND METHOD FOR THE PROTECTED INPUT OF SYMBOLS
INTERFACE UTILISATEUR ET PROCÉDÉ D'ENTRÉE PROTÉGÉE DE CARACTÈRES

(30) Priorität: 02.12.2014 DE 102014224676
(43) Veröffentlichungstag der Anmeldung: 06.09.2017
(73) Patentinhaber: WINCOR NIXDORF International GmbH, 33106 Paderborn (DE)
(72) Erfinder: NOLTE, Michael, 33034 Brakel (DE); GÖRLICH, Jürgen, 33428 Marienfeld (DE); LINDEMANN, Matthias, 33098 Paderborn (DE); WEGGE, Klaus-Peter, 33100 Paderborn (DE)
(74) Vertreter: 2K Patentanwälte Blasberg Kewitz & Reichel
(86) Internationale Anmeldenummer: PCT/EP2015/075896
(87) Internationale Veröffentlichungsnummer: WO 2016/087157

(56) Entgegenhaltungen:
- WO-A2-02/42891
- US-A1- 2007 298 785
- US-A1- 2010 222 095
- US-A1- 2011 148 774
- US-A1- 2012 050 179

## Beschreibung

Mit der Umstellung von mechanischen Tastaturen auf eine berührungsbasierte Bedienung mittels Tastfeldern, Tastschirmen oder Multi-Touch-Bildschirmen entsteht das Problem, dass die Tastatur, ihr Layout und die einzelnen Tasten sowie deren Druckpunkte nicht mehr fühlbar sind. Hierdurch werden Eingaben durch sehbehinderte oder blinde Personen besonders erschwert, da lernbare taktile Orientierungspunkte auf einem flachen Tastfeld oder Tastschirm nicht mehr vorhanden sind. Die Druckschrift US 2012/050179 A1 beschreibt eine Vorrichtung zur Authentisierung eines Benutzers an einem Terminal, an dem der Benutzer über eine berührungsempfindliche Oberfläche Zeichen basierend auf unterschiedlichen Benutzergesten eingeben kann. Ein erster Prozessor erkennt die Eingabe und ein zweiter Prozessor vergleicht diese mit einer verschlüsselt hinterlegten PIN.

In dem Dokument US 2011/148774 A1 ist eine Benutzerschnittstelle in der Form eines berührungsempfindlichen Displays ge zeigt, wobei auf dem Display eine Tastatur wiedergegeben werden kann und ein Benutzer eine entsprechende Taste der Tastatur über Bewegungen auf dem Display auswählen kann.

In der Druckschrift WO 02/42891 A2 ist eine Vorrichtung zur geschützten Dateneingabe beschrieben. Die Vorrichtung umfasst ein Dateneingabegerät, ein Display sowie eine mit dem Dateneingabegerät und dem Display gekoppelte Verschlüsselungseinheit. Über das Display wird eine Information ausgegeben, welche die Sicherheit der Vorrichtung bestätigt.

Das Dokument US 2007/298785 A1 beschreibt eine Vorrichtung zur Eingabe von Zeichen auf einem berührungsempfindlichen Sensor, wobei den Zeichen bestimmte Benutzergesten auf dem Sensor zugeordnet sind.

Durch die vorliegende Erfindung soll eine Benutzerschnittstelle und ein Verfahren zur geschützten Eingabe von Zeichen durch sehbehinderte oder blinde Personen geschaffen werden, welches eine intuitive und gegenüber Beobachtern weitgehend geschützte Eingabe von Zeichen erlaubt.

Die Erfindung geht von einer Benutzerschnittstelle aus, welche ein Bedienelement aufweist, welches eine berührungsempfindliche Oberfläche besitzt. Die Benutzerschnittstelle weist einen Prozessor oder mehrere Prozessoren auf, welche zur Erkennung einer Berührungseingabe programmiert sind, welche als Wischgeste in einem beliebigen Bereich auf der berührungsempfindlichen Oberfläche des Bedienelements ausführbar ist.

Zur Lösung der Aufgabe wird eine Benutzerschnittstelle mit den Merkmalen des Anspruchs 1 offenbart.

Demnach wird eine Benutzerschnittstelle offenbart zur geschützten Eingabe von Zeichen, mit einem Bedienelement, welches eine Anzeigefläche mit berührungsempfindlicher Oberfläche aufweist, und mit einem ersten Prozessor, welcher programmiert ist zur Erkennung einer Berührungseingabe, welche als Wischgeste in einem beliebigen Bereich auf der berührungsempfindlichen Oberfläche des Bedienelements ausführbar ist. Die Benutzerschnittstelle ist dadurch gekennzeichnet, dass sie einen zweiten Prozessor aufweist, der für eine Umschaltung zwischen einem Klartextmodus und einem geschützten Eingabemodus eingerichtet ist und ferner programmiert ist zur Bereitstellung einer unsichtbaren Tastatur auf der Anzeigefläche während dem geschützten Eingabemodus, wobei die unsichtbare Tastatur eine Anordnung von unsichtbaren Tasten definiert, von denen zu jedem Zeitpunkt genau eine ausgewählt ist, wobei den unsichtbaren Tasten jeweils ein Zeichen zugewiesen ist, welches mittels der jeweiligen unsichtbaren Taste eingebbar ist, und wobei während dem geschützten Eingabemodus keine visuelle oder akustische Ausgabe einer Position oder Belegung der ausgewählten unsichtbaren Taste vorgesehen ist. Außerdem ist der erste Prozessor zur Erkennung der Berührungseingabe programmiert, welche in dem geschützten Eingabemodus als Wischgeste ausführbar ist, und der zweite Prozessor ist programmiert zur Auswahl einer unsichtbaren Taste, welche in einer zu einer Richtung der Wischgeste analogen Richtung auf der unsichtbaren Tastatur neben der zuvor ausgewählten unsichtbaren Taste angeordnet ist. Und der erste Prozessor ist zur Erkennung einer Berührungseingabe eingerichtet, welche in dem geschützten Eingabemodus als Tippgeste in einem beliebigen Bereich auf der berührungsempfindlichen Oberfläche des Bedienelements ausführbar ist. Zudem ist der zweite Prozessor zur Erfassung des Zeichens eingerichtet, welches der zum Zeitpunkt der Tippgeste ausgewählten unsichtbaren Taste zugewiesen ist. Und das Bedienelement ist ein Tastfeld oder ein Tastschirm, wobei das Bedienelement als Berührungseingaben Berührungen mit einer oder mehreren Fingerspitzen verarbeitet und als Koordinaten oder Vektoren in einem Koordinatensystem an den ersten Prozessor übermittelt. Die Benutzerschnittstelle weist ein Sicherheitsmodul auf, in welchem der erste Prozessor in einem ersten Mikrocontroller mit einer ersten Kommunikationsschnittstelle angeordnet ist, welche das Bedienelement mit dem ersten Prozessor verbindet, und in welchem der zweite Prozessor in einem zweiten Mikrocontroller mit einer zweiten Kommunikationsschnittstelle angeordnet ist, welche den ersten Prozessor mit dem zweiten Prozessor verbindet, wobei der zweite Prozessor in dem geschützten Eingabemodus für eine Verschlüsselung erfasster Zeichen eingerichtet ist.

Auch wird ein mittels des dem ersten und zweiten Prozessors durchgeführtes Verfahren mit den Merkmalen des Anspruchs 12 offenbart.

Auf dem computerlesbaren Datenträger ist ein Computerprogramm gespeichert, welches das Verfahren ausführt, wenn es in der Benutzerschnittstelle abgearbeitet wird.

Das Computerprogramm wird in der Benutzerschnittstelle abgearbeitet und führt dabei das Verfahren aus.

Das Zugangssystem, das Selbstbedienungsterminal, das Kassensystem, das Bezahlterminal, der Geldautomat, das Überweisungsterminal, der Paketautomat, das SmartPhone, das Tablet, das Laptop und der Personal Computer weisen jeweils die Benutzerschnittstelle auf.

Weitere vorteilhafte Ausführungsformen der Erfindung sind durch die Merkmale der Unteransprüche gekennzeichnet.

Die im Folgenden genannten Vorteile müssen nicht notwendigerweise durch die Gegenstände der unabhängigen Patentansprüche erzielt werden. Vielmehr kann es sich hierbei auch um Vorteile handeln, welche lediglich durch einzelne Ausführungsformen, Varianten oder Weiterbildungen erzielt werden, die in den Unteransprüchen und Ausführungsbeispielen beschrieben sind.

Unter dem Begriff Zeichen werden beispielsweise Buchstaben, Ziffern und Sonderzeichen verstanden, wie sie zum Beispiel in den Zeichensätzen ASCII oder Unicode definiert sind. Andere Zeichensätze, die weder das lateinische Alphabet, noch die zehn arabischen Ziffern umfassen, können auch unter dem Begriff Zeichen verstanden werden. Weiterhin kann es sich bei den Zeichen nicht nur um darstellbare Zeichen, sondern auch um nicht-druckbare Steuerzeichen handeln. Weiterhin kann der Begriff Zeichen auch im Sinne einer Funktion einer Schaltfläche, wie etwa "OK" oder "Abbrechen" verstanden werden. In einem häufigen Anwendungsfall werden als Zeichen Ziffern eingegeben, wie sie beispielsweise in Telefonnummern, Kontonummern oder Zugangscodes benutzt werden. Jede unsichtbare Taste ist mit einem Zeichen belegt, welches durch sie eingebbar ist. Die Funktionen der Benutzerschnittstelle werden durch einen oder mehrere Prozessoren bereitgestellt. In einer Variante, die nicht Teil der beanspruchten Erfindung ist, ist ein einziger Prozessor programmiert, alle Schritte des Verfahrens durchzuführen. Gemäß der Erfindung ist ein erster Prozessor vorgesehen, um die Berührungseingaben zu verarbeiten, während ein zweiter Prozessor programmiert ist, um die unsichtbare Taste auszuwählen. Sämtliche der in den Ausführungsbeispielen beschriebenen Funktionen können folglieh durch einen Prozessor allein, durch mehrere Prozessoren gemeinsam oder durch Arbeitsteilung unter mehreren Prozessoren bereitgestellt werden. Die Prozessoren können als Mikroprozessoren beispielsweise in Computern, Terminals oder mobilen Endgeräten eingebaut sein, sie können aber auch Teil von Mikrocontrollern sein.

Die Benutzerschnittstelle und das Verfahren eignen sich für alle Systeme, welche über eine berührungsempfindliche Oberfläche gesteuert werden. Hierzu zählen insbesondere auch Benutzerschnittstellen mit einem Multi-Touch-Bildschirm. Die einfache Gestensteuerung der Benutzerschnittstelle und des Verfahrens kann beispielsweise zur Eingabe von persönlichen Identifikationsnummern (PIN) durch sehbehinderte oder blinde Personen an einem Bezahlterminal oder Geldautomaten eingesetzt werden.

Die Benutzerschnittstelle und das Verfahren stellen eine Abkehr von dem gängigen Paradigma einer Benutzerführung auf Tastschirmen dar, welches den Vorteil des Tastschirms gerade darin sieht, eine Hand-Augen-Koordination zu ermöglichen, indem eine Berührung eines Nutzers genau an der Stelle auf dem Tastschirm erfolgt, an der eine entsprechende Schaltfläche visualisiert wird. Die Wischgeste ist hingegen in einem beliebigen Bereich auf der berührungsempfindlichen Oberfläche ausführbar .

In sämtlichen Assistenzsystemen für sehbehinderte oder blinde Personen ist eine akustische Ausgabe der ausgewählten Taste bzw. Schaltfläche Stand der Technik (Screenreader-Funktion). Auch hiervon erfolgt eine Abkehr, indem die visuelle und akustische Ausgabe der ausgewählten unsichtbaren Taste unterdrückt wird. Beispielsweise kann ein Multi-Touch-Bildschirm während einer PIN-Eingabe dunkel oder leer bleiben, so dass ein Beobachter Wischgesten nicht unmittelbar den eingegebenen Ziffern zuordnen kann. Die ausgewählten Ziffern der PIN werden vom System auch nicht akustisch ausgegeben.

Die Benutzerschnittstelle beziehungsweise das Verfahren machen sich eine Metapher zunutze, welche ein Nutzer als mentales Modell zur Steuerung verwenden kann. Entsprechend der Metapher liegt auf der ausgewählten unsichtbaren Taste eine Münze, welche durch die Wischgesten auf benachbarte unsichtbare Tasten verschoben werden kann. Folglich ist zu jedem Zeitpunkt genau eine unsichtbare Taste ausgewählt, welche beispielsweise durch eine Tippgeste in einem beliebigen Bereich auf der berührungsempfindlichen Oberfläche betätigt werden kann, wodurch das entsprechende Zeichen eingegeben wird.

Die Wischgeste wird beispielsweise über eine kurze Strecke ausgeführt. Diese Strecke kann in einer Ausführungsform mindestens 3 cm betragen. Sie kann in horizontaler und vertikaler Richtung, aber auch in diagonaler Richtung ausgeführt werden. Diagonale Wischgesten ermöglichen eine besonders schnelle Auswahl der entsprechenden unsichtbaren Tasten. Da auch mehrere Wischgesten hintereinander ausgeführt werden können, kann die Auswahl der unsichtbaren Taste beliebig oft modifiziert werden.

Gemäß einer Ausführungsform wird die Auswahl der unsichtbaren Taste von deren Betätigung separiert, indem zur Betätigung der ausgewählten unsichtbaren Taste eine eigene Berührungseingabe, hier eine Tippgeste, erforderlich ist. Dies hat den Vorteil, dass ein Nutzer die Benutzerschnittstelle zunächst explorieren kann, bevor er eine tatsächliche Zeicheneingabe durchführt.

Gemäß einer Ausführungsform ermöglichen die Benutzerschnittstelle und das Verfahren sehbehinderten oder blinden Nutzern eine genaue, einfache und sichere Eingabe einer PIN.

Das Verfahren kann auf herkömmlicher, bereits vorhandener Hardware implementiert werden. Die Benutzerschnittstelle ist nach zuverlässigen und nutzerzentrierten Richtlinien konzipiert. Sie ermöglicht es, die unsichtbaren Tasten durch einfache Wischgesten auszuwählen. Hierbei entfällt eine Notwendigkeit für visuelles oder sprachliches Feedback oder eine Lokalisierung von Bedienelementen. Dadurch wird es blinden oder sehbehinderten Nutzern ermöglicht, eine Geheimzahl mittels Touchbedienung selbständig und ohne fremde Hilfe einzugeben. Hierdurch wird auch den gesetzlichen Anforderungen in unterschiedlichen Ländern Rechnung getragen.

Im Folgenden werden Ausführungsbeispiele der Erfindung anhand von Figuren näher erläutert. In den Figuren sind gleiche oder funktionsgleiche Elemente mit denselben Bezugszeichen versehen, sofern nichts anderes angegeben ist. Es zeigen:
- Figur 1: eine Benutzerschnittstelle mit einem Bedienelement 43, welches eine berührungsempfindliche Oberfläche 44 umfasst, welche eine Auswahl unsichtbarer Tasten 21 einer unsichtbaren Tastatur 20 mittels horizontaler und vertikaler Wischgesten ermöglicht,
- Figur 2: eine unsichtbare Tastatur 20 mit unsichtbaren Tasten 21, welche mittels horizontaler, vertika-ler und diagonaler Wischgesten auswählbar sind,
- Figur 3: eine berührungsempfindliche Oberfläche 44, auf der eine vertikale Wischgeste 23 ausgeführt wird,
- Figur 4: eine berührungsempfindliche Oberfläche 44, auf der eine vertikale Wischgeste 23 ausgeführt wird,
- Figur 5: eine berührungsempfindliche Oberfläche 44, auf der eine Tippgeste 24 ausgeführt wird,
- Figur 6: eine berührungsempfindliche Oberfläche 44, auf der eine horizontale Wischgeste 23 ausgeführt wird,
- Figur 7: eine berührungsempfindliche Oberfläche 44, auf der eine vertikale Wischgeste 23 ausgeführt wird,
- Figur 8: eine berührungsempfindliche Oberfläche 44, auf der eine Tippgeste 24 ausgeführt wird,
- Figur 9: eine unsichtbare Tastatur 20, deren Tasten im Layout einer Telefontastatur angeordnet sind,
- Figur 10: eine unsichtbare Tastatur 20, deren Tasten im Layout eines numerischen Ziffernblocks angeordnet sind,
- Figur 11: eine unsichtbare Tastatur 20, deren Tasten im QWERTY-Layout angeordnet sind,
- Figur 12: eine virtuelle Tastatur 30 mit virtuellen Tasten 31, welche auf einem Tastschirm angezeigt wird, auf dessen berührungsempfindlicher Oberfläche 44 eine horizontale Wischgeste 23 ausgeführt wird,
- Figur 13: eine berührungsempfindliche Oberfläche 44, auf der eine vertikale Wischgeste ausgeführt wird,
- Figur 14: eine berührungsempfindliche Oberfläche 44, auf der eine horizontale Wischgeste 23 ausgeführt wird,
- Figur 15: eine berührungsempfindliche Oberfläche 44, auf der eine Tippgeste 24 ausgeführt wird,
- Figur 16: eine Systemarchitektur einer Benutzerschnittstelle,
- Figur 17: ein Ablaufdiagramm eines Computerprogramms.

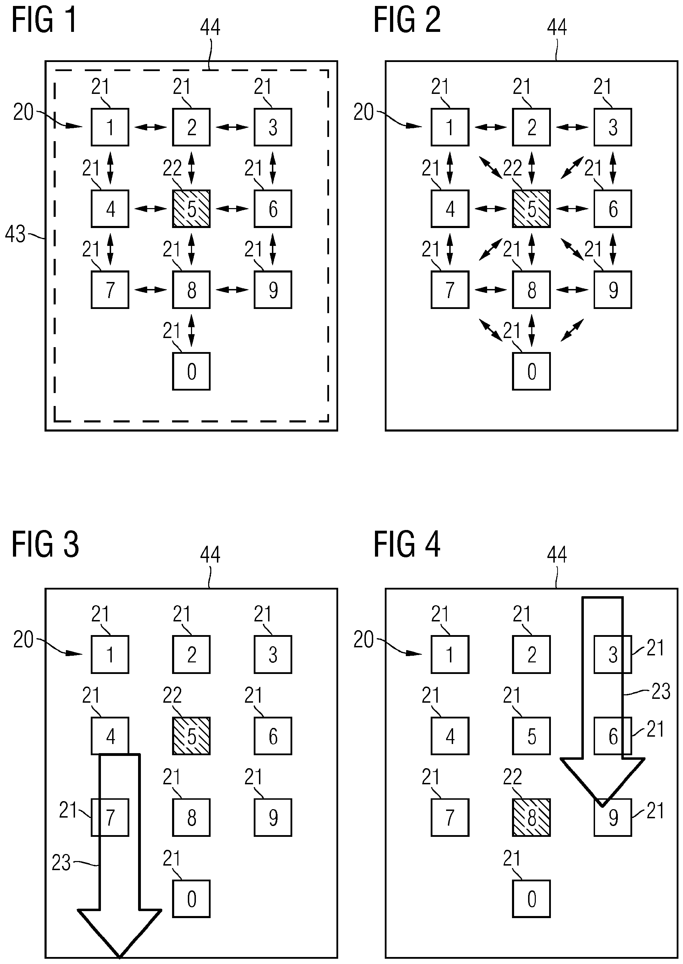

Figur 1 zeigt eine Benutzerschnittstelle mit einem Bedienelement 43, welches eine berührungsempfindliche Oberfläche 44 umfasst, welche eine Auswahl unsichtbarer Tasten 21 einer unsichtbaren Tastatur 20 mittels horizontaler und vertikaler Wischgesten ermöglicht. Die unsichtbaren Tasten 21 sind im Layout einer Telefontastatur angeordnet. Die unsichtbare Taste in der Mitte mit der Ziffer 5 ist eine vorab ausgewählte unsichtbare Taste 22. Mittels horizontaler und vertikaler Wischgesten, welche im Folgenden noch erläutert werden, lässt sich die Auswahl von der Ziffer 5 entsprechend den in Figur 1 gezeigten Pfeilen auf jede der anderen unsichtbaren Tasten 21 verschieben.

Die Wischgesten werden auf einer berührungsempfindlichen Oberfläche 44 eines Bedienelements 43 ausgeführt. Bei der berührungsempfindlichen Oberfläche 44 handelt es sich um die aktive Fläche, auf der Berührungseingaben und Gesten korrekt ausgewertet werden können. Die berührungsempfindliche Oberfläche 44 kann kleiner sein als eine sensorische Fläche des Bedienelements 43. Eine Berührungseingabe außerhalb der berührungsempfindlichen Oberfläche 44 im Randbereich der sensorischen Fläche kann zu einer akustischen oder haptischen Fehlermeldung führen. Auch in den folgenden Ausführungsbeispielen bezeichnet die berührungsempfindliche Oberfläche 44 die aktive Fläche, auf der Berührungseingaben und Gesten korrekt ausgewertet werden können, und welche nicht notwendig die komplette sensorische Fläche des Bedienelements 43 ausfüllt.

Figur 2 zeigt eine unsichtbare Tastatur 20 mit unsichtbaren Tasten 21 entsprechend Figur 1, bei der die Auswahl der ausgewählten unsichtbaren Taste 22 neben den horizontalen und vertikalen Wischgesten auch mittels diagonaler Wischgesten verschoben werden kann. Diagonale Wischgesten sind auch in sämtlichen anderen Ausführungsbeispielen eine mögliche Variante.

Figur 3 zeigt die berührungsempfindliche Oberfläche 44 eines Bedienelements, beispielsweise eines Tastfelds, eines Tastschirms oder eines Multi-Touch-Bildschirms . Die in Figur 3 eingezeichnete unsichtbare Tastatur 20 mit ihren unsichtbaren Tasten 21 und der ausgewählten unsichtbaren Taste 22 dient in Figur 3 allein der Veranschaulichung. Auf der realen Benutzerschnittstelle werden diese Elemente weder auf dem Bedienelement 43 eingezeichnet, noch über einen Tastschirm oder einen Multi-Touch-Bildschirm graphisch ausgegeben, noch sind sie in irgendeiner anderen Weise für einen Nutzer erkennbar. Der Nutzer hat jedoch nach entsprechender Schulung ein mentales Modell der unsichtbaren Tastatur 20, der unsichtbaren Tasten 21 und der ausgewählten unsichtbaren Taste 22 erlernt, welches er zur Zifferneingabe mittels des Bedienelements 43 aktiv und bewusst nutzt. Für den Zweck der Schulung oder zur Hilfestellung könnte die unsichtbare Tastatur 20 temporär eingeblendet werden. Im Umkehrschluss verwaltet ein Prozessor, in welchem das zugehörige Computerprogramm abläuft, ebenfalls ein entsprechendes Modell der unsichtbaren Tastatur 20, ihrer unsichtbaren Tasten 21 sowie der ausgewählten unsichtbaren Taste 22, welches der Prozessor jedoch nicht über die Benutzerschnittstelle visuell oder akustisch an den Nutzer ausgibt.

Als Metapher für die Bedienung dient eine Münze, welche zu Beginn jeder Zifferneingabe auf der unsichtbaren Taste mit der Ziffer 5 zu liegen kommt, und welche mittels Wischgesten horizontal, vertikal und diagonal auf die anderen unsichtbaren Tasten 21 verschoben werden kann. Theoretisch wäre es möglich, die Münze mit beliebig vielen Wischgesten auf der unsichtbaren Tastatur 20 zu verschieben.

Mit einer einfachen Wischgeste nach rechts oder links wird die Münze ausgehend von der Ziffer 5 auf die Ziffer 6 oder Ziffer 4 geschoben. Entsprechend wird ausgehend von der Ziffer 5 mit einer Wischgeste nach oben oder unten die Ziffer 2 oder die Ziffer 8 erreicht. Durch entsprechende diagonale Wischgesten werden die Ziffern 1, 9, 3 und 7 erreicht. Somit werden alle Ziffern rund um die Ziffer 5 mit einer einzigen Wischgeste erreicht. Zur Auswahl der Ziffer 5 ist hingegen keine Wischgeste erforderlich, denn dort liegt die Münze bereits zu Anfang sowie nach jeder erfolgreichen Eingabe. Lediglich für die Ziffer 0 muss zweimal nach unten gewischt werden.

Wenn die Münze auf der gewünschten Ziffer liegt, wird die Eingabe der Ziffer durch einen Zwei-Finger-Tipp, d.h. durch ein einfaches Tippen mit zwei Fingerspitzen bestätigt. Danach liegt die Münze wieder auf der Ziffer 5 und die nächste Ziffer kann ausgewählt und bestätigt werden. Die Ziffern-Eingabe wird mit einem langen Zwei-Finger-Tipp abgeschlossen.

Ein Drei-Finger-Tipp startet die Ziffern-Eingabe von vorne, während ein langer Drei-Finger-Tipp die Transaktion abbricht. Die Wischgesten und Tippgesten können an beliebigen Stellen auf der berührungsempfindlichen Oberfläche 44 erfolgen, welche jedoch wie zuvor erläutert kleiner sein kann als die sensorische Fläche des Bedienelements. Neutrale Tonsignale bestätigen den Erfolg der jeweiligen Geste oder signalisieren eine nicht erkannte oder fehlerhafte Geste. Ein Fehler wird beispielsweise signalisiert, wenn die Münze auf der Ziffer 6 liegt und mit einer Wischgeste nach rechts versucht wird, sie über den Rand der unsichtbaren Tastatur 20 hinauszuschieben.

Wenn der Nutzer also eine Wischgeste ausführt, welche nicht verarbeitet werden kann, da in Richtung der Wischgeste keine weitere unsichtbare Taste 21 auf der unsichtbaren Tastatur 20 zur Auswahl zur Verfügung steht, kann ein spezielles akustisches oder haptisches Signal ausgegeben werden, welches dies für den Nutzer anzeigt.

Im Ergebnis wird eine gestenbasierte sichere Ziffern-Eingabe bei Systemen mit Touch-Screen bereitgestellt, beispielsweise zur Eingabe einer PIN an Geldautomaten, Selbstbedienungsterminals, Kassensystemen, Bezahlterminals, Paketautomaten, Überweisungsterminals oder Telefonen. Zur Rückmeldung können anstelle von Tönen auch Vibrationen erzeugt werden. Dieses Verfahren ist insbesondere für Blinde und Sehbehinderte geeignet. Das System kann einen Trainingsmodus für den Nutzer vorsehen. Weiterhin können durch Sprachsynthese Hinweise und Anweisungen an den Nutzer ausgegeben werden.

Im Folgenden wird auf einen konkreten Bedienablauf Bezug genommen, der in den Figuren 3 bis 5 gezeigt ist. Mit dem Nutzer wurde vorab vereinbart, dass standardmäßig zu Beginn jeder Zifferneingabe als ausgewählte unsichtbare Taste 22 die Taste mit der Ziffer 5 in der Mitte ausgewählt ist. Im in Figur 3 gezeigten Beispiel möchte der Nutzer die unsichtbare Taste 21 mit der Ziffer 0 auswählen.

Da die unsichtbare Tastatur 20 nicht dargestellt wird, kann der Nutzer eine Wischgeste 23 vertikal von oben nach unten an einer beliebigen Stelle auf der berührungsempfindlichen Oberfläche 44 ansetzen, welche in keiner Weise mit dem Layout der unsichtbaren Tastatur 20 übereinstimmen muss.

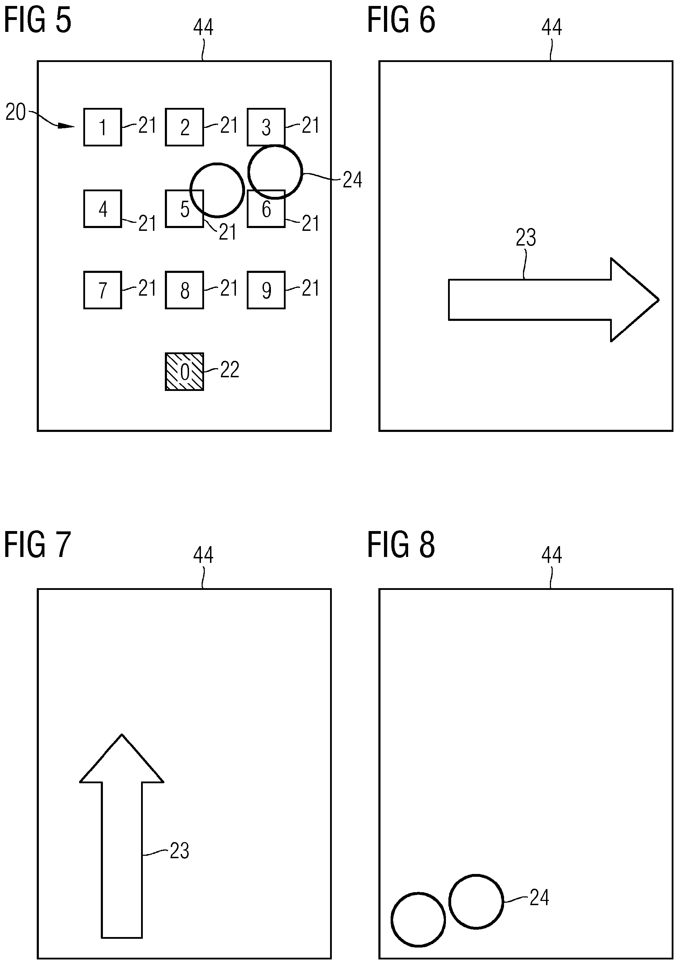

Durch die Wischgeste 23 wird die Auswahl auf die unsichtbare Taste 21 mit der Ziffer 8 verschoben, welche als ausgewählte unsichtbare Taste 22 in Figur 4 eingezeichnet ist. Der Nutzer führt nun eine weitere vertikale Wischgeste 23 von oben nach unten auf der berührungsempfindlichen Oberfläche 44 durch, wodurch die Ziffer 0 als ausgewählte unsichtbare Taste 22 ausgewählt wird, wie dies in Figur 5 gezeigt ist. Da der Nutzer die Ziffer 0 eingeben möchte, führt er nun eine Tippgeste 24 - erneut an einem beliebigen Platz auf der berührungsempfindlichen Oberfläche 44 - durch, wodurch die Eingabe der Ziffer 0 bestätigt wird.

Nach der Bestätigung der Eingabe der Ziffer 0 wird die Auswähl wieder auf die unsichtbare Taste 21 mit der Ziffer 5 zurückgesetzt. Wischgesten sind folglich zur Auswahl der Ziffer 5 nicht erforderlich. Sofern als nächstes diese Ziffer eingegeben werden soll, genügt es, eine Tippgeste durchzuführen, um die Auswahl der unsichtbaren Taste 21 mit der Ziffer 5 zu bestätigen.

Die Figuren 6 bis 8 zeigen einen weiteren Bedienablauf, bei dem mit größerer Übereinstimmung mit der Realität die unsichtbare Tastatur 20 nicht mehr eingezeichnet ist. Die Figuren 6 bis 8 entsprechen somit einer Interaktionserfahrung, wie sie ein Nutzer in der Realität mit der Benutzerschnittstelle machen würde. Auch hier ist erneut die unsichtbare Taste mit der Ziffer 5 zu Beginn der Zifferneingabe automatisch vorab ausgewählt. Der Nutzer möchte die Ziffer 3 eingeben. Hierzu könnte er einfach eine diagonale Wischgeste nach rechts oben auf der berührungsempfindlichen Oberfläche 44 durchführen und dies anschließend mit einem Zwei-Finger-Tipp bestätigen. Figur 6 zeigt entsprechend Figur 1 den Fall, dass lediglich horizontale und vertikale Wischgesten 23 zulässig sind. Um zur Ziffer 3 zu gelangen, muss der Nutzer also zunächst beispielsweise eine Wischgeste 23 nach rechts auf der berührungsempfindlichen Oberfläche 44 ausführen. Hierdurch wird die Auswahl auf die unsichtbare Taste mit der Ziffer 6 verschoben .

Anschließend führt der Nutzer einer Wischgeste 23 nach oben auf der berührungsempfindlichen Oberfläche 44 durch, wie dies in Figur 7 gezeigt ist. Hierdurch wird die Auswahl auf die unsichtbare Taste mit der Ziffer 3 verschoben. Da dies die Taste ist, welche der Nutzer betätigen möchte, nimmt er in Figur 8 eine Tippgeste 24, im gezeigten Beispiel ein Tipp mit zwei Fingerspitzen, vor. Hierdurch wir die Eingabe der Ziffer 3 bestätigt.

Wichtig ist hierbei, dass die Benutzerschnittstelle eine geschlossene Funktionalität besitzt, das heißt, dass es nicht möglich ist, die aktuell ausgewählte unsichtbare Taste mittels einer Screenreader-Software akustisch auszugeben.

Ein weiteres Ausführungsbeispiel verwendet die im Kontext der Figuren 1 bis 8 erläuterte Anordnung unsichtbarer Tasten 21 zur Eingabe von Buchstaben analog zu Mobiltelefonen, welche eine Buchstabeneingabe über die Zifferntasten erlauben. Zu diesem Zweck sind den unsichtbaren Tasten 21 folgende Buchstabenfolgen zugeordnet:
2 : a, b, c
3: d, e, f
4 : h, i
5: j , k, 1
6: m, n, o
7: p, q, r, s
8 : t , u, v
9: w, x, y, z

In einem Texteingabemodus ist den unsichtbaren Tasten 21 standardmäßig jeweils der erste Buchstabe aus der Buchstabenfolge zugeordnet. Zur Eingabe dieses ersten Buchstabens wird die gewünschte unsichtbare Taste 22 wie im Kontext der Figuren 1 bis 8 erläutert durch Wischgesten ausgewählt. Danach wird die Eingabe des ersten Buchstabens durch einen Zwei-Finger-Tipp bestätigt.

Zur Auswahl eines nachfolgenden Buchstabens aus der Buchstabenfolge wird die jeweilige unsichtbare Taste 22 wie im Kontext der Figuren 1 bis 8 erläutert durch Wischgesten ausgewählt. Danach wechselt der Nutzer die Belegung der ausgewählten unsichtbaren Taste 22 durch einen Ein-Finger-Tipp, wobei der Buchstabe, welcher aktuell der ausgewählten unsichtbaren Taste 22 zugewiesen ist, durch den Buchstaben aus der Buchstabenfolge ersetzt wird, welcher ihm nachfolgt. Dies kann beliebig oft wiederholt werden, wobei im Anschluss an den letzten Buchstaben der Buchstabenfolge wieder der erste Buchstabe der Buchstabenfolge der ausgewählten unsichtbaren Taste 22 zugewiesen wird. Anschließend wird die Eingabe des aus der Buchstabenfolge ausgewählten Buchstabens durch einen Zwei-Finger-Tipp bestätigt.

Nach Eingabe jedes Buchstabens springt die Auswahl wie im Kontext der Figuren 1 bis 8 erläutert zurück auf die unsichtbare Taste 21, welche im Zifferneingabemodus die Ziffer 5 eingeben würde.

Im vorliegenden Ausführungsbeispiel ist die Eingabe des Wortes "hallo" durch die folgenden Berührungseingaben möglich:
h: nach links, Ein-Finger-Tipp, Zwei-Finger-Tipp
a: nach oben, Zwei-Finger-Tipp
l: Ein-Finger-Tipp, Ein-Finger-Tipp, Zwei-Finger-Tipp
l: Ein-Finger-Tipp, Ein-Finger-Tipp, Zwei-Finger-Tipp
o: nach rechts, Ein-Finger-Tipp, Ein-Finger-Tipp, Zwei- Finger-Tipp

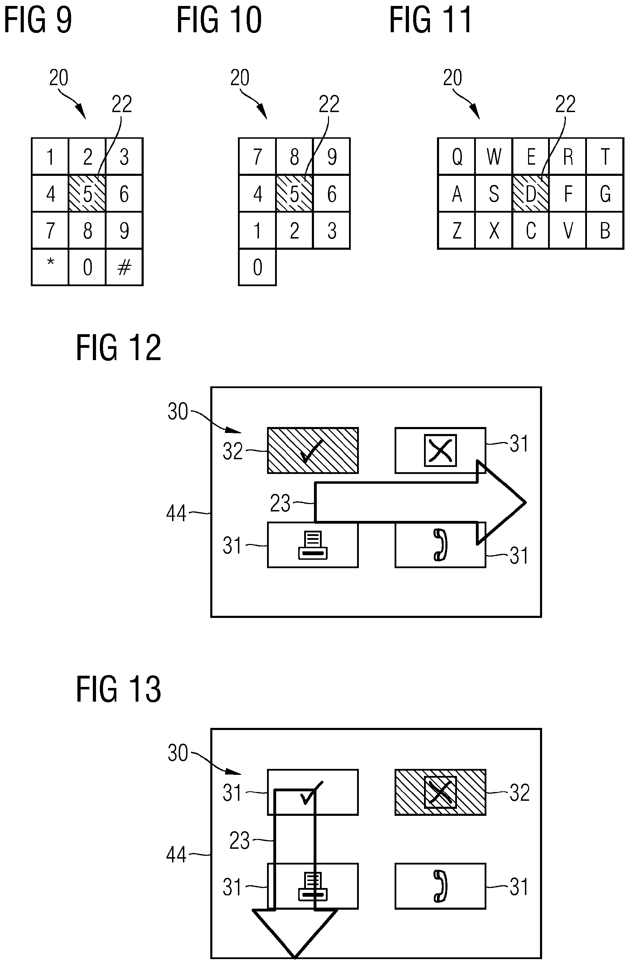

Figur 9 zeigt eine unsichtbare Tastatur 20 mit einer ausgewählten unsichtbaren Taste 22, welche zusätzlich um die beiden Sonderzeichen einer Telefontastatur erweitert ist. Eine solche unsichtbare Tastatur 20 eignet sich beispielsweise zur Eingabe von Telefonnummern. Ausgehend von der standardmäßig ausgewählten unsichtbaren Taste 22, hier erneut mit der Ziffer 5, sind die unsichtbaren Tasten mit den Sonderzeichen * und # beispielsweise mittels zweier vertikaler und einer horizontalen Wischgeste (nach unten, unten, links; nach unten, unten, rechts) , oder mittels einer vertikalen und einer diagonalen Wischgeste auswählbar.

Figur 10 zeigt eine unsichtbare Tastatur 20, deren Tasten entsprechend dem Layout eines numerischen Tastaturblocks angeordnet sind. Ausgehend von der standardmäßig ausgewählten unsichtbaren Taste 22, hier erneut mit der Ziffer 5, ist die unsichtbare Taste mit der Ziffer 0 beispielsweise mittels zweier vertikaler und einer horizontalen Wischgeste (nach unten, links, unten) , oder mittels einer vertikalen und einer diagonalen Wischgeste auswählbar.

Figur 11 zeigt eine unsichtbare Tastatur 20 mit einer ausgewählten unsichtbaren Taste 22, deren Tasten im QWERTY-Layout angeordnet sind. Gemäß diesem Ausführungsbeispiel können Buchstaben ausgewählt und eingegeben werden. Ausgehend von der standardmäßig ausgewählten unsichtbaren Taste 22, hier erneut mit dem Buchstaben D, sind die unsichtbaren Tasten beispielsweise wie folgt durch Wischgesten auswählbar:
Q nach links , links, oben
A nach links , links
Z nach links , links, unten
T nach rechts , rechts, oben
G nach rechts , rechts
B: nach rechts, rechts, unten.

Figur 12 zeigt eine virtuelle Tastatur 30 mit virtuellen Tasten 31 und einer ausgewählten virtuellen Taste 32, welche auf einer berührungsempfindlichen Oberfläche 44 eines Multi-Touch-Bildschirms visuell ausgegeben werden. Wie zuvor kann die berührungsempfindliche Oberfläche 44 kleiner sein als eine sensorische Oberfläche oder Anzeigefläche des Bildschirms. Eine solche visuelle Ausgabe kann mit der geschützten Zifferneingabe, wie sie im Kontext der Figuren 1 bis 8 beschrieben wurde, alternierend betrieben werden. Beispielsweise kann ein Nutzer zunächst im geschützten Eingabemodus eine vier-oder mehrstellige PIN eingeben, bevor er durch eine geeignete Tippgeste zu der in Figur 12 gezeigten Bildschirmansicht gelangt. Die ausgewählte virtuelle Taste 32 mit einer Bestätigen-Funktionalität ist vorab ausgewählt und wird dem Nutzer durch eine Screenreader-Funktion vorgelesen. Durch eine Tippgeste könnte der Nutzer diese Auswahl bestätigen, wodurch beispielsweise seine PIN-Eingabe abgesendet wird.

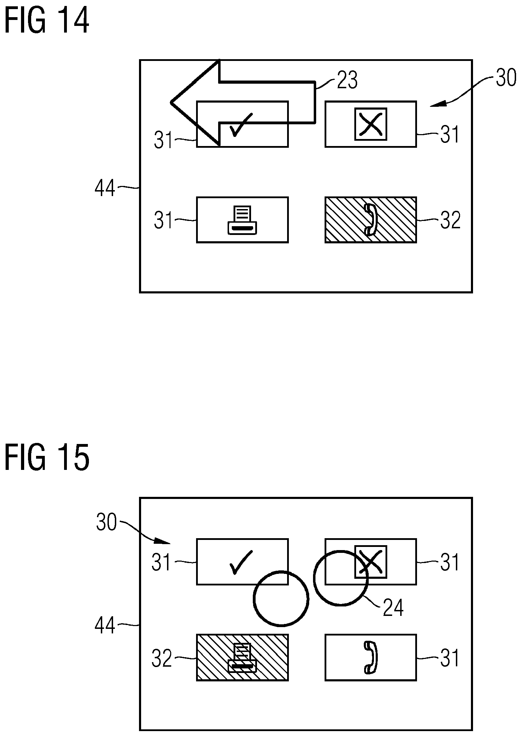

Durch eine Wischgeste 23 nach rechts verschiebt der Nutzer im gezeigten Beispiel jedoch die Auswahl auf die Taste mit dem Abbrechen-Symbol, wie in Figur 13 gezeigt. Die nun ausgewählte Abbrechen-Funktion wird dem Nutzer durch eine Screenreader-Funktion vorgelesen. Nun führt der Nutzer eine Wischgeste 23 nach unten durch, wodurch die Auswahl auf die Taste mit dem Telefonsymbol verschoben wird. Entsprechend Figur 14 führt der Nutzer anschließend eine Wischgeste 23 nach links durch, wodurch die Auswahl auf der Taste mit dem Druckersymbol zu liegen kommt. Auf diese Weise kann der Nutzer mit einfachen Wischgesten 23 den Inhalt des Bildschirms explorieren, wobei ihm jeweils die Belegungen beziehungsweise Funktionen der Tasten beziehungsweise Schaltflächen mittels Sprachsynthese vorgelesen werden.

Da der Nutzer im gezeigten Beispiel einen Ausdruck erstellen möchte, führt er in Figur 15 eine Tippgeste 24 mit zwei Fingerspitzen auf dem Bedienelement 43 durch, wodurch die Auswähl der ausgewählten virtuellen Taste 32 mit dem Druckersymbol bestätigt wird.

Wenn der Nutzer eine Wischgeste ausführt, welche nicht verarbeitet werden kann, da in Richtung der Wischgeste keine weitere virtuelle Taste 31 auf der virtuellen Tastatur 30 zur Auswahl zur Verfügung steht, kann ein spezielles akustisches oder haptisches Signal ausgegeben werden, welches dies für den Nutzer anzeigt.

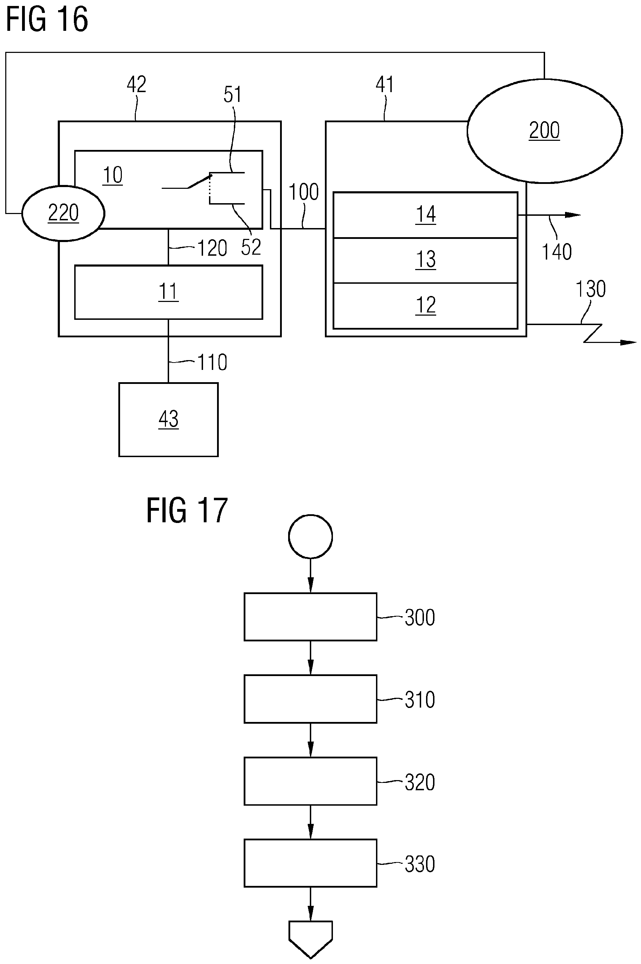

Figur 16 zeigt eine schematische Darstellung eines Ausführungsbeispiels der Benutzerschnittstelle zur geschützten Eingabe von Zeichen. Der Aufbau besteht im Wesentlichen aus drei Elementen. Eine Datenverarbeitungseinheit 41 besitzt einen Mikroprozessor, einen Speicher sowie ein Betriebsprogramm 200. Darüber hinaus verfügt sie über eine Audio-Einheit 14 mit Verstärker und Lautsprecher, einen Schwingungserzeuger 13 zur Erzeugung haptischer Signale sowie eine Anzeige 12 beziehungsweise eine Graphikkarte zu deren Ansteuerung. Die Audio-Einheit 14 besitzt vorzugsweise einen Kopfhöreranschluss 140. Vorzugsweise sieht die Benutzerschnittstelle eine Einstellmöglichkeit für die Lautstärke am Kopfhöreranschluss 140 vor. Das Betriebsprogramm 200 wird von der Datenverarbeitungseinheit 41 ausgeführt. Die Datenverarbeitungseinheit 41 verfügt über eine Kommunikationsschnittstelle 130 zu weiteren Systemen.

Ein weiteres Element der Benutzerschnittstelle ist ein Sicherheitsmodul 42, welches einen zweiten Mikrokontroller 10 mit einem Speicher und einem Prozessor einerseits sowie einen ersten Mikrokontroller 11 zur Auswertung von Eingaben umfasst, welche ein Bedienelement 43 mit einer berührungsempfindlichen Oberfläche über eine erste Kommunikationsschnittstelle an den ersten Mikrokontroller 11 meldet. Das Sicherheitsmodul 42 enthält ein Steuerprogramm 220, welche auf einer Firmware gespeichert ist. Der erste Mikrokontroller 11 ist über eine zweite Kommunikationsschnittstelle 120 mit dem zweiten Mikrokontroller 10 verbunden.

Die Kommunikationsschnittstellen 100, 110 oder 120 können als serielle Schnittstelle ausgebildet sein.

Der zweite Mikrokontroller 10 kann sowohl in einen Klartextmodus 52 als auch in einen geschützten Eingabemodus 51 geschaltet werden. Er ist über eine externe Kommunikationsschnittstelle 100 mit der Datenverarbeitungseinheit 41 verbunden, so dass das Betriebsprogramm 200 auf der Datenverarbeitungseinheit 41 mit dem Steuerprogramm 220 auf dem Sicherheitsmodul 42 kommunizieren kann. Das Bedienelement 43 leitet Berührungseingaben wie Tippgesten oder Wischgesten beispielsweise als (Vielzahl von) Koordinaten beziehungsweise Vektoren in einem Koordinatensystem an den ersten Mikrokontroller 11 weiter. Das Bedienelement 43 kann auch mit der Anzeige 12 zusammenfallen und als Multi-Touch-Bildschirm ausgebildet sein.

Das Betriebsprogramm 200 veranlasst Bildschirmausgaben auf der Anzeige 12, akustische Signale, welche durch die Audio-Einheit 14 ausgegeben werden, sowie haptische Signale, welche durch den Schwingungserzeuger 13 erzeugt werden. Im Wesentlichen steuert das Betriebsprogramm 200 die Benutzerschnittstelle für sehende, sehbehinderte und blinde Personen, die sich beispielsweise für einen Dienst authentifizieren wollen. In einer möglichen Anwendung authentifiziert sich ein blinder Nutzer mit einer Geheimzahl, um eine Finanztransaktion durchzuführen. Dabei werden die Authentifizierungsdaten durch das Sicherheitsmodul 42 als verschlüsselter Datensatz erzeugt und der Datenverarbeitungseinheit 41 zur Verfügung gestellt.

Figur 17 zeigt den prinzipiellen Ablauf des Betriebsprogramms 200 für eine solche PIN-Eingabe und -Ausgabe. Dabei werden Kommandos von der Datenverarbeitungseinheit 41 an das Sicherheitsmodul 42 über die externe Kommunikationsschnittstelle 100 gesendet.

Nach einem Start des Betriebsprogramms 200 wird eine Sicherheitsmodus-Aktivierung 300 durchgeführt, indem das BetriebsProgramm 200 dem Sicherheitsmodul 42 mitteilt, dass die nachfolgenden Eingaben über das Bedienelement 43 im geschützten Eingabemodus 51 verarbeitet werden sollen. Dies hat zur Folge, dass Koordinaten oder Vektoren von Berührungen, welche das Bedienelement 43 registriert und der erste Mikrokontroller 11 auswertet, nicht an die Datenverarbeitungseinheit 41 übermittelt werden, sondern intern durch den zweiten Mikrokontroller 10 des Sicherheitsmoduls 42 verarbeitet und gespeichert werden.

Im nächsten Schritt erfolgt eine PIN-Eingabe 310, bei welcher Berührungseingaben des Nutzers verarbeitet und jeweils Notifikationen an die Datenverarbeitungseinheit 41 gesendet werden. Eine solche Notifikation gibt jedoch keinen Aufschluss über die tatsächlich eingegebenen Ziffern, sondern bezeichnet beispielsweise ein Ereignis "Eingabe erfolgt". Die Datenverarbeitungseinheit 41 kann daraufhin den Nutzer informieren, indem sie beispielsweise ein akustisches Signal über die Audio-Einheit 14 oder ein haptisches Signal über den Schwingungserzeuger 13 erzeugt und ausgibt. Vorzugsweise wird die Bildschirmausgabe über die Anzeige 12 hierbei nicht aktiviert.

Im nächsten Schritt erfolgt eine PIN-Verschlüsselung 320, welche vom Betriebsprogramm 200 veranlasst und vom Sicherheitsmodul 42 durchgeführt wird und die eingegebenen Authentifizierungsdaten verschlüsselt.

Im Zuge einer PIN-Entschlüsselung 330 kann die PIN seitens der Datenverarbeitungseinheit 41 nach der Übertragung über die externe Kommunikationsschnittstelle 100 ausgelesen werden.

Das Steuerprogramm 220 auf der Firmware des Sicherheitsmoduls 42 stellt die entsprechend benötigten Funktionen des Sicherheitsmoduls 42 über die externe Kommunikationsschnittstelle 100 für die Datenverarbeitungseinheit 41 bereit. Dazu zählen im Kontext dieses Ausführungsbeispiels die Auswertung von Berührungseingaben, welche der Nutzer auf der berührungsempfindlichen Oberfläche des Bedienelements 43 ausführt, die Interpretation dieser Berührungseingaben als Wischgesten oder Tippgesten, die Verarbeitung der Berührungseingaben zur Auswähl von Ziffern auf der unsichtbaren Tastatur, das Senden von Notifikationen über die externe Kommunikationsschnittstelle 100 nach jeder erkannten Berührungseingabe, das Speichern der eingegebenen Ziffern in einem internen Sicherheitsspeicher, das Verschlüsseln der eingegebenen Ziffern mit einen kryptographischen Schlüssel, das Übertragen der verschlüsselten Ziffern über die externe Kommunikationsschnittstelle 100, sowie das Umschalten zwischen dem Klartextmodus 52 und dem geschützten Eingabemodus 51.

Sofern das Bedienelement 43 als Multi-Touch-Bildschirm ausgebildet ist, sollte dieser zumindest Zwei-Finger-Gesten verarbeiten können. Vorzugsweise verfügt die Datenverarbeitungseinheit 41 über ein Sprachsynthesemodul, welches den Nutzer führen und unterstützen kann. Die einzelnen Berührungseingaben können durch akustische oder haptische Signale quittiert werden. Als Berührungseingaben kommen beispielsweise Tippgesten, doppelte Tippgesten, längeres Tippen und Berühren, Scrollen, Wischgesten etc. in Frage.

Die spezielle Unterstützung für blinde oder sehbehinderte Nutzer kann automatisch aktiviert werden, sobald ein Kopfhörer in den Kopfhöreranschluss 140 eingesteckt wird. Alternativ kann die Benutzerschnittstelle beispielsweise so konfiguriert werden, dass ein Berühren und Halten mit einem Finger für drei Sekunden in der oberen rechten Ecke des Bildschirms den Unterstützungsmodus für blinde oder sehbehinderte Nutzer aktiviert. Hierbei wird der Standardmodus der Benutzerschnittstelle zur Verarbeitung von Berührungseingaben und Gesten auf einen Eingabemodus mit spezieller Assistenz für blinde und sehbehinderte Menschen umgestellt, welcher spezifische Gesten unterstützt und mit akustischen Signalen quittiert, so dass blinde Nutzer die Benutzerschnittstelle komfortabel und intuitiv bedienen können. Zum Verlassen des speziellen Modus zur Unterstützung blinder Nutzer kann beispielsweise der Kopfhörer aus dem Kopfhöreranschluss 140 abgesteckt werden.

Nachdem die gewünschte unsichtbare Taste ausgewählt wurde, kann die berührungsempfindliche Oberfläche des Bedienelements 43 beispielsweise mit einem Finger doppelt angetippt werden. Diese Tippgeste aktiviert die ausgewählte unsichtbare Taste, wodurch die zugeordnete Ziffer eingegeben wird. Eine andere geeignete Tippgeste ist ein einfaches Tippen mit zwei Fingerspitzen, um die ausgewählte unsichtbare Taste zu betätigen.

Eine weitere Geste kann dazu reserviert werden, zwischen dem geschützten Eingabemodus 51 zur PIN-Eingabe und einem Klartextmodus 52 zum Bedienen von Schaltflächen hin- und her zu wechseln. Als Geste wird hierzu beispielsweise ein doppeltes Tippen mit zwei Fingerspitzen definiert. Hierdurch wird die Zifferneingabe pausiert oder beendet und der Fokus auf Schaltflächen gelegt, wie sie beispielsweise in den Figuren 12 bis 15 gezeigt sind. Derartige Schaltflächen sind beispielsweise mit den Funktionen "Alle Ziffern löschen", "Letzte Ziffer löschen", "Eingabe bestätigen" und "Zurück" belegt.

An einem Bezahlterminal ist der durch die Anzeige 12 dargestellte Bildschirminhalt beispielsweise in unterschiedliche Bereiche aufgeteilt: ein Feld mit dem zu zahlenden Betrag, ein Feld für die PIN-Eingabe, sowie ein Bereich mit den zuvor genannten vier Schaltflächen zum Bestätigen oder Löschen der eingegebenen Ziffern.

Durch geeignete akustische Sprachsynthese-Ausgaben kann ein blinder Nutzer in Verbindung mit einer Screenreader- Funktionalität , welche im geschützten Eingabemodus jedoch nicht die Belegung der unsichtbaren Tasten vorliest, geführt werden. Die Belegung der jeweils ausgewählten unsichtbaren Taste darf im geschützten Eingabemodus keinesfalls per Sprachsynthese an den Nutzer ausgegeben werden, um die Integrität und den Datenschutz während der PIN-Eingabe zu gewährleisten .

Jedoch können beispielsweise die folgenden Sprachsynthese-Ausgaben den Nutzer im gesamten Ablauf unterstützen:
1. Bitte geben Sie Ihre Karte ein
2. Ihre Karte konnte nicht erkannt werden, bitte versuchen Sie es erneut
3. Ihre Karte wurde erkannt, bitte tippen Sie doppelt auf den Bildschirm, um fortzufahren
4. Der Zahlbetrag ist 450,00 $, bitte tippen Sie doppelt mit einem Finger, um fortzufahren
5. Bitte geben Sie die erste/zweite/dritte/vierte/.../letzte Ziffer Ihrer PIN ein
6. Bitte wischen Sie nach links, rechts, oben, unten, um die nächste unsichtbare Taste auszuwählen
7. Bitte tippen Sie doppelt, um die Ziffer zu bestätigen

Sobald der Nutzer zu der in Figur 12 gezeigten Bildschirmansicht wechselt, wird ihm die Belegung beziehungsweise Funktion der ausgewählten virtuellen Taste 32 vorgelesen, beispielsweise "Bitte bestätigen Sie die Transaktion". Dies bedeutet, dass dem Nutzer nach jedem Wechsel zu diesen Kontrolltasten erneut die standardmäßig ausgewählte Taste "Transaktion bestätigen" vorgelesen wird. Als Ausgaben nach sukzessiver Auswahl unterschiedlicher Schaltflächen analog zu Figur 12 bis 15 eignen sich beispielsweise:
1. Bitte tippen Sie doppelt, um fortzufahren
2. Bitte tippen Sie doppelt, um abzubrechen
3. Bitte tippen Sie doppelt, um die letzte Ziffer zu löschen
4. Bitte tippen Sie doppelt, um alle Ziffern zu löschen
5. Bitte tippen Sie doppelt, um zurück ins Hauptmenü zu gelan-gen Gemäß einem Ausführungsbeispiel aktiviert ein Nutzer den Unterstützungsmodus durch Einstecken eines Kopfhörers in den Kopfhöreranschluss 140. Daraufhin erhält er ausführliche Informationen über die unterstützen Gesten. Optional wird ein Demonstrations- und Übungsmodus bereitgestellt, mit dem sich der Nutzer mit der Benutzerschnittstelle vertraut machen kann.

Nachdem der Nutzer seine Karte korrekt eingeführt hat, wird der Zahlbetrag vorgelesen und mit einer Sprachausgabe "Bitte starten Sie die Transaktion" abgeschlossen. Diese Sprachausgäbe wird wiederholt, bis der Nutzer mit einem Doppel-Tipp bestätigt hat, dass er mit der Transaktion fortfahren möchte. Daraufhin wird die unsichtbare Tastatur 20 aus Figur 1 bis Figur 8 aktiviert, welche es dem Nutzer in dem geschützten Eingabemodus erlaubt, seine PIN einzugeben. Eine akustische Sprachaufforderung fordert den Nutzer auf, die erste Ziffer einzugeben .

Obwohl die Erfindung durch die Ausführungsbeispiele im Detail illustriert und beschrieben wurde, ist sie nicht durch die offenbarten Beispiele eingeschränkt. Andere Variationen können vom Fachmann hieraus abgeleitet werden, ohne den Schutzumfang der Erfindung zu verlassen. Die beschriebenen Ausführungsbeispiele, Varianten, Ausführungsformen und Weiterbildungen können auch frei miteinander kombiniert werden. Der Gegenstand der Erfindung wird durch die Patentansprüche angegeben.

## Patentansprüche

1. Benutzerschnittstelle zur geschützten Eingabe von Zeichen, mit einem Bedienelement (43), welches eine Anzeigefläche mit berührungsempfindlicher Oberfläche (44) aufweist, und mit einem ersten Prozessor (11), welcher programmiert ist zur Erkennung einer Berührungseingabe, welche als Wischgeste (23) in einem beliebigen Bereich auf der berührungsempfindlichen Oberfläche (44) des Bedienelements (43) ausführbar ist,
wobei die Benutzerschnittstelle einen zweiten Prozessor (10) aufweist, der für eine Umschaltung zwischen einem Klartextmodus (52) und einem geschützten Eingabemodus (51) eingerichtet ist und ferner programmiert ist zur Bereitstellung einer unsichtbaren Tastatur (20) auf der Anzeigefläche während dem geschützten Eingabemodus (51), wobei die unsichtbare Tastatur (20) eine Anordnung von unsichtbaren Tasten (21) definiert, von denen zu jedem Zeitpunkt genau eine ausgewählt ist,
- wobei den unsichtbaren Tasten (21) jeweils ein Zeichen zugewiesen ist, welches mittels der jeweiligen unsichtbaren Taste (21) eingebbar ist, und
- wobei während dem geschützten Eingabemodus (51) keine visuelle oder akustische Ausgabe einer Position oder Belegung der ausgewählten unsichtbaren Taste (22) vorgesehen ist,
wobei der erste Prozessor (11) zur Erkennung der Berührungseingabe programmiert ist, welche in dem geschützten Eingabemodus (51) als Wischgeste (23) ausführbar ist,
wobei der zweite Prozessor (10) programmiert ist zur Auswahl einer unsichtbaren Taste (21), welche in einer zu einer Richtung der Wischgeste (23) analogen Richtung auf der unsichtbaren Tastatur (20) neben der zuvor ausgewählten unsichtbaren Taste (22) angeordnet ist, und
wobei der erste Prozessor (11) zur Erkennung einer Berührungseingabe eingerichtet ist, welche in dem geschützten Eingabemodus (51) als Tippgeste (24) in einem beliebigen Bereich auf der berührungsempfindlichen Oberfläche (44) des Bedienelements (43) ausführbar ist, dass der zweite Prozessor (10) zur Erfassung des Zeichens eingerichtet ist, welches der zum Zeitpunkt der Tippgeste (24) ausgewählten unsichtbaren Taste (22) zugewiesen ist, dass das Bedienelement (43) ein Tastfeld oder ein Tastschirm ist,
wobei das Bedienelement (43) als Berührungseingaben Berührungen mit einer oder mehreren Fingerspitzen verarbeitet und als Koordinaten oder Vektoren in einem Koordinatensystem an den ersten Prozessor (11) übermittelt,
und wobei die Benutzerschnittstelle ein Sicherheitsmodul (42) aufweist, in welchem der erste Prozessor (11) in einem ersten Mikrocontroller mit einer ersten Kommunikationsschnittstelle (110) angeordnet ist, welche das Bedienelement (43) mit dem ersten Prozessor (11) verbindet, und in welchem der zweite Prozessor (10) in einem zweiten Mikrocontroller mit einer zweiten Kommunikationsschnittstelle (120) angeordnet ist, welche den ersten Prozessor (11) mit dem zweiten Prozessor (10) verbindet,
wobei der zweite Prozessor (10) in dem geschützten Eingabemodus (51) für eine Verschlüsselung erfasster Zeichen eingerichtet ist.

2. Benutzerschnittstelle nach Anspruch 1,
- mit einer Audio-Einheit (14) und/oder einem Schwingungserzeuger (13), und
- mit einer Datenverarbeitungseinheit (41), welche programmiert ist,
- während oder nach der Wischgeste (23) ein erstes akustisches und/oder haptisches Signal auszugeben, welches keinen Rückschluss auf die Richtung der Wischgeste (23) erlaubt,
- während oder nach der Tippgeste (24) - ein zweites akustisches und/oder haptisches Signal auszugeben, welches keinen Rückschluss auf das erfasste Zeichen erlaubt, und
- nach einer Berührungseingabe, welche nicht erkannt wurde, ein drittes akustisches und/oder haptisches Signal auszugeben.

3. Benutzerschnittstelle nach Anspruch 2,
- bei der der zweite Prozessor (10) programmiert ist, nach Erkennung einer Wischgeste (23) die zuvor ausgewählte unsichtbare Taste (22) beizubehalten, sofern in der zu der Richtung der Wischgeste (23) analogen Richtung auf der unsichtbaren Tastatur (20) neben der zuvor ausgewählten unsichtbaren Taste (22) keine unsichtbare Taste (21) angeordnet ist, und
- bei der die Datenverarbeitungseinheit (41) programmiert ist, diese Wischgeste (23) mit der Ausgabe des dritten akustischen und/oder haptischen Signals oder eines vierten akustischen und/oder haptischen Signal zu quittieren.

4. Benutzerschnittstelle nach Anspruch 1, 2 oder 3,
- bei der der zweite Prozessor (10) programmiert ist, nach jeder Erfassung eines Zeichens eine fest vorgegebene Taste unter den unsichtbaren Tasten (21) als ausgewählte unsichtbare Taste (22) auszuwählen.

5. Benutzerschnittstelle nach Anspruch 4,
- bei der die unsichtbaren Tasten (21) in vier Zeilen angeordnet sind, wobei
- die Ziffern 1, 2, 3 von links nach rechts drei unsichtbaren Tasten (21) in der obersten Zeile zugewiesen sind,
- die Ziffern 4, 5, 6 von links nach rechts drei unsichtbaren Tasten (21) in der zweiten Zeile zugewiesen sind,
- die Ziffern 7, 8, 9 von links nach rechts drei unsichtbaren Tasten (21) in der dritten Zeile zugewiesen sind, und
- die Ziffer 0 einer unsichtbaren Taste (21) zugewiesen ist, welche sich in der untersten Zeile in einer mittleren Position befindet, und
- bei der der zweite Prozessor (10) programmiert ist, nach jeder Erfassung eines Zeichens die unsichtbare Taste (21), welcher die Ziffer 5 zugewiesen ist, als ausgewählte unsichtbare Taste (22) auszuwählen.

6. Benutzerschnittstelle nach Anspruch 5,
- bei der die unsichtbaren Taste (21), welcher die Ziffer 0 zugewiesen ist, durch zwei aufeinanderfolgende Wischgesten (23) nach unten auswählbar ist, sofern zuvor die unsichtbare Taste (21) ausgewählt war, welcher die Ziffer 5 zugewiesen ist.

7. Benutzerschnittstelle nach einem der vorhergehenden Ansprüche,
- bei der die Wischgesten (23) horizontale und vertikale Wischgesten, oder horizontale, vertikale und diagonale Wischgesten sind, und
- bei der die unsichtbaren Tasten (21) in einem rechtwinkligen Gitter angeordnet sind, so dass horizontale, vertikale oder diagonale Nachbarn der ausgewählten unsichtbaren Taste (22) eindeutig bestimmt sind.

8. Benutzerschnittstelle nach Anspruch 7, bei der das Sicherheitsmodul (42)
- eine externe Kommunikationsschnittstelle (100) aufweist, welche für eine Kommunikation mit einer Datenverarbeitungseinheit (41) eingerichtet ist,
- bei der der zweite Prozessor (10) in dem geschützten Eingabemodus (51) eingerichtet ist zur -Sendung einer Notifikation über die externe Kommunikationsschnittstelle (100) nach einer Erkennung einer Berührungseingabe durch den ersten Prozessor (11),
- Ablage erfasster Zeichen in einem internen Sicherheitsspeicher,
- Verschlüsselung erfasster Zeichen mit einem kryptografischen Schlüssel,
- Übertragung der verschlüsselten Zeichen über die externe Kommunikationsschnittstelle (100), und
- Unterdrückung einer Übertragung von Koordinaten oder Vektoren von Berührungseingaben über die externe Kommunikationsschnittstelle (100), und
- bei der der zweite Prozessor (10) in dem Klartextmodus (52) eingerichtet ist zur
- Übertragung von Koordinaten oder Vektoren von Berührungseingaben über die externe Kommunikationsschnittstelle (100).

9. Benutzerschnittstelle nach Anspruch 8,
mit der Datenverarbeitungseinheit (41), welche programmiert ist
- zur Umschaltung des zweiten Prozessors (10) vom Klartextmodus (52) in den geschützten Eingabemodus (51) über die externe Kommunikationsschnittstelle (100),
- zur Ausgabe eines akustischen oder haptischen Signals bei Empfang der Notifikation über die externe Kommunikationsschnittstelle (100), und
- zur Unterdrückung einer Bildschirmausgabe, während sich der zweite Prozessor (10) in dem geschützten Eingabemodus (51) befindet.

10. Benutzerschnittstelle nach einem der vorhergehenden Ansprüche,
wobei die Tippgeste (24) ein Tipp mit zwei Fingerspitzen ist und bei der die Prozessoren (10, 11) programmiert sind nach Auswahl der unsichtbaren Taste (22) und vor Erkennung der Tippgeste (24) und Erfassung des Zeichens
- zur Erkennung einer Ein-Finger-Tippgeste, welche in dem geschützten Eingabemodus (51) in einem beliebigen Bereich auf der berührungsempfindli
chen Oberfläche (44) des Bedienelements (43) ausführbar ist,
- zur Ersetzung des Zeichens, welches der zum Zeitpunkt der Ein-Finger-Tippgeste ausgewählten unsichtbaren Taste (22) zugewiesen ist, durch ein dem Zeichen nachfolgendes Zeichen aus einer Folge von Zeichen,
- insbesondere zur Wiederholung dieser beiden Schritte.

11. Zugangssystem, Selbstbedienungsterminal, Kassensystem, Bezahlterminal, Geldautomat, Überweisungsterminal, Paketautomat, SmartPhone, Tablet, Laptop oder Personal Computer, welches/welcher die Benutzerschnittstelle nach einem der Ansprüche 1 bis 10 aufweist.

12. Verfahren zur geschützten Eingabe von Zeichen,
- bei dem ein Bedienelement (43) verwendet wird, dass eine Anzeigefläche mit berührungsempfindlicher Oberfläche (44) aufweist, und
- bei dem mittels eines ersten Prozessors (11)
- eine Berührungseingabe erkannt wird, welche als Wischgeste (23) in einem beliebigen Bereich auf der berührungsempfindlichen Oberfläche (44) des Bedienelements (43) ausgeführt wird,
wobei mittels eines zweiten Prozessors (10) eine Umschaltung zwischen einem Klartextmodus (52) und einem geschützten Eingabemodus (51) ausgeführt wird und
- auf der Anzeigefläche während dem geschützten Eingabemodus (51) eine unsichtbare Tastatur (20) bereitgestellt wird, welche eine Anordnung von unsichtbaren Tasten (21) definiert, von denen zu jedem Zeitpunkt genau eine ausgewählt ist,
- wobei den unsichtbaren Tasten (21) jeweils ein Zeichen zugewiesen ist, welches mittels der jeweiligen unsichtbaren Taste (21) eingebbar ist, und
- wobei während einem geschützten Eingabemodus (51) keine visuelle oder akustische Ausgabe einer Position oder Belegung der ausgewählten unsichtbaren Taste (22) erfolgt,
wobei mittels des ersten Prozessors (11) eine Berührungseingabeerkannt wird, welche in dem geschützten Eingabemodus (51) als Wischgeste (23) in einem beliebigen Bereich auf der berührungsempfindlichen Oberfläche (44) des Bedienelements (43) ausgeführt wird,
wobei mittels des zweiten Prozessors (10) eine unsichtbare Taste (21) ausgewählt wird, welche in einer zu einer Richtung der Wischgeste (23) analogen Richtung auf der unsichtbaren Tastatur (20) neben der zuvor ausgewählten unsichtbaren Taste (22) angeordnet ist,
wobei mittels des ersten Prozessors (11) eine Berührungseingabe erkannt wird, welche in dem geschützten Eingabemodus (51) als Tippgeste (24) in einem beliebigen Bereich auf der berührungsempfindlichen Oberfläche (44) des Bedienelements (43) ausgeführt wird, und wobei mittels des zweiten Prozessors (10) das Zeichen erfasst wird, welches der zum Zeitpunkt der Tippgeste (24) ausgewählten unsichtbaren Taste (22) zugewiesen ist,
dass das Bedienelement (43) ein Tastfeld oder ein Tastschirm ist,
wobei mittels des Bedienelements (43) als Berührungseingaben Berührungen mit einer oder mehreren Fingerspitzen verarbeitet werden und als Koordinaten oder Vektoren in einem Koordinatensystem an den ersten Prozessor (11) übermittelt werden, und wobei die Benutzerschnittstelle ein Sicherheitsmodul (42) aufweist, in welchem der erste Prozessor (11) in einem ersten Mikrocontroller mit einer ersten Kommunikationsschnittstelle (110) angeordnet ist, welche das Bedienelement (43) mit dem ersten Prozessor (11) verbindet, und in welchem der zweite Prozessor (10) in einem zweiten Mikrocontroller mit einer zweiten Kommunikationsschnittstelle (120) angeordnet ist, welche den ersten Prozessor (11) mit dem zweiten Prozessor (10) verbindet,
wobei mittels des zweiten Prozessors (10) in dem geschützten Eingabemodus (51) eine Verschlüsselung erfasster Zeichen ausgeführt wird.

13. Verfahren nach Anspruch 12,
- bei dem eine Datenverarbeitungseinheit (41) mittels einer Audio-Einheit (14) und/oder einem Schwingungserzeuger (13) während oder nach der Wischgeste (23) ein erstes akustisches und/oder haptisches Signal ausgibt, welches keinen Rückschluss auf die Richtung der Wischgeste (23) erlaubt,
- während oder nach der Tippgeste (24) ein zweites akustisches und/oder haptisches Signal ausgibt, welches keinen Rückschluss auf das erfasste Zeichen erlaubt, und nach einer Berührungseingabe, welche nicht erkannt wurde, ein drittes akustisches und/oder haptisches Signal ausgibt.

14. Verfahren nach Anspruch 13,
- bei dem der zweite Prozessor (10) nach Erkennung einer Wischgeste (23) die zuvor ausgewählte unsichtbare Taste (22) beibehält, sofern in der zu der
Richtung der Wischgeste (23) analogen Richtung auf der unsichtbaren Tastatur (20) neben der zuvor ausgewählten unsichtbaren Taste (22) keine unsichtbare Taste (21) angeordnet ist, und
- bei dem die Datenverarbeitungseinheit (41) diese Wischgeste (23) mit der Ausgabe des dritten akustischen und/oder haptischen Signals oder eines vierten akustischen und/oder haptischen Signal quittiert.

15. Verfahren nach Anspruch 12, 13 oder 14,
- bei dem der zweite Prozessor (10) nach jeder Erfassung eines Zeichens eine fest vorgegebene Taste unter den unsichtbaren Tasten (21) als ausgewählte unsichtbare Taste (22) auswählt.

16. Verfahren nach Anspruch 15,
- bei dem die unsichtbaren Tasten (21) in vier Zeilen angeordnet sind, wobei
- die Ziffern 1, 2, 3 von links nach rechts drei unsichtbaren Tasten (21) in der obersten Zeile zugewiesen sind,
- die Ziffern 4, 5, 6 von links nach rechts drei unsichtbaren Tasten (21) in der zweiten Zeile zugewiesen sind,
- die Ziffern 7, 8, 9 von links nach rechts drei unsichtbaren Tasten (21) in der dritten Zeile zugewiesen sind, und
- die Ziffer 0 einer unsichtbaren Taste (21) zugewiesen ist, welche sich in der untersten Zeile in einer mittleren Position befindet, und
- bei dem der zweite Prozessor (10) nach jeder Erfassung eines Zeichens die unsichtbare Taste (21), welcher die Ziffer 5 zugewiesen ist, als ausgewählte unsichtbare Taste (22) auswählt.

17. Verfahren nach Anspruch 16,
- bei dem die unsichtbare Taste (21), welcher die Ziffer 0 zugewiesen ist, durch zwei aufeinanderfolgende Wischgesten (23) nach unten ausgewählt wird, sofern zuvor die unsichtbare Taste (21) ausgewählt war, welcher die Ziffer 5 zugewiesen ist.

18. Verfahren nach einem der Ansprüche 12 bis 17,
- bei dem die Wischgesten (23) horizontale und vertikale Wischgesten, oder horizontale, vertikale und diagonale Wischgesten sind, und
- bei dem die unsichtbaren Tasten (21) in einem rechtwinkligen Gitter angeordnet sind, so dass horizontale, vertikale oder diagonale Nachbarn der ausgewählten unsichtbaren Taste (22) eindeutig bestimmt sind.

19. Verfahren nach Anspruch 12,
- bei dem der zweite Prozessor (10) in dem geschützten Eingabemodus (51)
- eine Notifikation über eine externe Kommunikationsschnittstelle (100) nach einer Erkennung einer Berührungseingabe durch den ersten Prozessor (11) sendet,
- erfasste Zeichen in einem internen Sicherheitsspeicher ablegt,
- erfasste Zeichen mit einem kryptografischen Schlüssel verschlüsselt,
- die verschlüsselten Zeichen über die externe Kommunikationsschnittstelle (100) überträgt, und
- eine Übertragung von Koordinaten oder Vektoren von Berührungseingaben über die externe Kommunikationsschnittstelle (100) unterdrückt, und
- bei dem der zweite Prozessor (10) in dem Klartextmodus (52)
- Koordinaten oder Vektoren von Berührungseingaben über die externe Kommunikationsschnittstelle (100) überträgt.

20. Verfahren nach Anspruch 19,
bei dem eine Datenverarbeitungseinheit (41)
- den zweiten Prozessors (10) vom Klartextmodus (52) in den geschützten Eingabemodus (51) über die externe Kommunikationsschnittstelle (100) umschaltet,
- ein akustisches oder haptisches Signal bei Empfang der Notifikation über die externe Kommunikationsschnittstelle (100) ausgibt, und
- eine Bildschirmausgabe unterdrückt, während sich der zweite Prozessor (10) in dem geschützten Eingabemodus (51) befindet.

21. Verfahren nach einem der Ansprüche 12 bis 20,
wobei die Tippgeste (24) ein Tipp mit zwei Fingerspitzen ist und
wobei nach Auswahl der unsichtbaren Taste (22) und vor Erkennung der Tippgeste (24) und Erfassung des Zeichens
- eine Ein-Finger-Tippgeste erkannt wird, welche in dem geschützten Eingabemodus (51) in einem beliebigen Bereich auf der berührungsempfindlichen Oberfläche (44) des Bedienelements (43) ausgeführt wird,
- das Zeichen, welches der zum Zeitpunkt der Ein-Finger-Tippgeste ausgewählten unsichtbaren Taste (22) zugewiesen ist, durch ein dem Zeichen nachfolgendes Zeichen aus einer Folge von Zeichen ersetzt wird,
- insbesondere diese beiden Schritte wiederholt werden.

22. Computerlesbarer Datenträger,
- auf dem ein Computerprogramm gespeichert ist, welches das Verfahren nach einem der Ansprüche 12 bis 21 ausführt mittels einer Benutzerschnittstelle gemäß einem der Ansprüche 1-10.

23. Computerprogramm,
- welches das Verfahren nach einem der Ansprüche 12 bis 21 ausführt mittels einer Benutzerschnittstelle gemäß einem der Ansprüche 1-10.

## Claims

1. User interface for the protected input of characters / symbols, comprising an operating element (43) which has a display area with a touch-sensitive surface (44), and comprising a first processor (11) being programmed to recognize a touch input which can be executed as a swipe gesture (23) in any area on the touch-sensitive surface (44) of the operating element (43),
wherein the user interface comprises a second processor (10) which is arranged for switching between a plain text mode (52) and a protected input mode (51) and which is further programmed to provide an invisible keyboard (20) on the display area during the protected input mode (51), wherein the invisible keyboard (20) defines an arrangement of invisible keys (21), of which exactly one is selected at any time,
- wherein to each of the invisible keys (21) a character is assigned which can be entered by means of the respective invisible key (21), and
- wherein no visual or acoustic output of a position or assignment of the selected invisible key (22) is provided during the protected input mode (51),
wherein the first processor (11) is programmed to recognize the touch input, which can be executed as a swipe gesture (23) in the protected input mode (51),
wherein the second processor (10) is programmed to select an invisible key (21) which is arranged in a direction analogous to a direction of the swipe gesture (23) on the invisible keyboard (20) next to the previously selected invisible key (22), and
wherein the first processor (11) is designed to recognize a touch input which can be executed in the protected input mode (51) as a tapping gesture (24) in any area on the touch-sensitive surface (44) of the operating element (43), wherein the second processor (10) is designed to detect the character which is assigned to the invisible key (22) selected at the time of the tapping gesture (24),
wherein the operating element (43) processes touches with one or more fingertips as touch inputs and transmits them as coordinates or vectors in a coordinate system to the first processor (11), and
wherein the user interface has a security module (42), in which the first processor (11) is arranged in a first microcontroller with a first communication interface (110), which connects the operating element (43) to the first processor (11), and in which the second processor (10) is arranged in a second microcontroller with a second communication interface (120), which connects the first processor (11) to the second processor (10),
wherein the second processor (10) is designed in the protected input mode (51) for encryption of captured characters.

2. User interface according to claim 1,
- having an audio unit (14) and/or a vibration generator (13), and
- having a data processing unit (41) which is programmed
- for emitting a first acoustic and/or haptic signal during or after the swiping gesture (23), which does not allow any conclusions to be drawn about the direction of the swiping gesture (23),
- for emitting a second acoustic and/or haptic signal during or after the tapping gesture (24), which does not allow any conclusions to be drawn about the captured character,
and
- for emitting a third acoustic and/or haptic signal after a touch input that was not recognized.

3. User interface according to claim 2,
- wherein the second processor (10) is programmed to retain the previously selected invisible key (22) after detection of a swipe gesture (23), provided that no invisible key (21) is arranged on the invisible keyboard (20) next to the previously selected invisible key (22) in the direction analogous to the direction of the swipe gesture (23), and
- wherein the data processing unit (41) is programmed to acknowledge this wiping gesture (23) with the output of the third acoustic and/or haptic signal or a fourth acoustic and/or haptic signal.

4. User interface according to claim 1, 2 or 3,
- wherein the second processor (10) is programmed to select a predefined key from the invisible keys (21) as the selected invisible key (22) after each character is detected.

5. User interface according to claim 4,
- wherein the invisible keys (21) are arranged in four rows, wherein
- the digits 1, 2, 3 are assigned from left to right to three invisible keys (21) in the top line,
- the digits 4, 5, 6 are assigned from left to right to three invisible keys (21) in the second line,
- the digits 7, 8, 9 are assigned from left to right to three invisible keys (21) in the third row, and
- the digit 0 is assigned to an invisible key (21), which is located in a middle position in the bottom line, and
- wherein the processor or one of the processors (10, 11) is programmed to select the invisible key (21) to which the digit 5 is assigned as the selected invisible key (22) after each detection of a character.

6. User interface according to claim 5,
- wherein the invisible key (21), to which the digit 0 is assigned, can be selected by two successive downward swipe gestures (23), provided that the invisible key (21), to which the digit 5 is assigned, was previously selected.

7. User interface according to one of the preceding claims,
- wherein the swipe gestures (23) are horizontal and vertical swipe gestures, or horizontal, vertical and diagonal swipe gestures, and
- wherein the invisible keys (21) are arranged in a rectangular grid so that horizontal, vertical or diagonal neighbors of the selected invisible key (22) are clearly defined.

8. User interface according to claim 7,
wherein the safety module (42)
- comprises an external communication interface (100) which is designed for communication with a data processing unit (41),
- wherein the second processor (10) is designed in the protected input mode (51) for
- transmitting transmitting a notification via the external communication interface (100) after a touch input has been recognized by the first processor (11),
- storage of recorded characters in an internal security memory,
- encryption of captured characters with a cryptographic key,
- transmission of the encrypted characters via the external communication interface (100), and
- suppression of transmission of coordinates or vectors of touch inputs via the external communication interface (100), and
- wherein the second processor (10) is designed in the plain text mode (52) for
- transmission of coordinates or vectors of touch inputs via the external communication interface (100).

9. User interface according to claim 8,
having the data processing unit (41), which is programmed
- for switching the second processor (10) from plain text mode (52) to protected input mode (51) via the external communication interface (100),
- for emitting an acoustic or haptic signal upon receipt of the notification via the external communication interface (100), and
- for suppressing a screen output while the second processor (10) is in the protected input mode (51).

10. User interface according to any of the preceding claims,
wherein the tapping gesture (24) is a tap with two fingertips and wherein the processor or processors (10, 11) is/are programmed after selecting the invisible key (22) and before recognizing the tapping gesture (24) and capturing the character
- for recognizing a one-finger tapping gesture which can be executed in the protected input mode (51) in any area on the touch-sensitive surface (44) of the operating element (43),
- to replace the character assigned to the invisible key (22) selected at the time of the one-finger tapping gesture with a character from a sequence of characters following the character,
- especially for repeating these two steps.

11. Access system, Self-service terminal, Cash register system, Payment terminal, Automated Teller Machine /ATM, Remittance terminal, Parcel machine, SmartPhone, Tablet, Laptop or Personal computer, which comprises the user interface according to any one of claims 1 to 10.

12. Method for the protected input of characters/symbols,
- wherein an operating element (43) has a display area with a touch-sensitive surface (44), and
- wherein by means of a first processor (11)
- a touch input is recognized, which is executed as a swipe gesture (23) in any area on the touch-sensitive surface (44) of the operating element (43),
wherein by means of a second processor (10) a switching between a plain text mode (52) and a protected input mode (51) is performed, and
- an invisible keyboard (20) is provided on the display area during the protected input mode (51), which defines a arrangement of invisible keys (21), of which exactly one is selected at any time,
- wherein the invisible keys (21) are each assigned a character which can be entered by means of the respective invisible key (21), and
- wherein during a protected input mode (51) there is no visual or acoustic output of a position or assignment of the selected invisible key (22),
wherein, by means of the first processor (11), a touch input is recognized which is executed in the protected input mode (51) as a swipe gesture (23) in any area on the touch-sensitive area on the touch-sensitive surface (44) of the operating element (43),
wherein, by means of the second processor (10), an invisible key (21) is selected which is arranged in a direction analogous to a direction of the swipe gesture (23) on the invisible keyboard (20) next to the previously selected invisible key (22),
wherein, by means of the first processor (11), a touch input is recognized which is executed in the protected input mode (51) as a tapping gesture (24) in any area on the touch-sensitive surface (44) of the operating element (43), and
wherein, by means of the second processor (10), the character assigned to the invisible key (22) selected at the time of the tapping gesture (24) is detected,
wherein the operating element (43) is a touch panel or a touch screen, wherein touches with one or more fingertips are processed as touch inputs by means of the operating element (43) and are transmitted to the first processor (11) as coordinates or vectors in a coordinate system, and
wherein the user interface comprises a security module (42), wherein the first processor (11) is arranged in a first microcontroller with a first communication interface (110) which connects the operating element (43) to the first processor (11), and wherein the second processor (10) is arranged in a second microcontroller with a second communication interface (120) which connects the first processor (11) to the second processor (10),
wherein, by means of the second processor (10), an encryption of captured characters is processed in the protected input mode (51).

13. Method according to claim 12,
- wherein a data processing unit (41) outputs a first acoustic and/or haptic signal by means of an audio unit (14) and/or a vibration generator (13) during or after the wiping gesture (23) which does not allow any conclusions to be drawn about the direction of the wiping gesture (23),
- emits a second acoustic and/or haptic signal during or after the touch gesture (24) which does not allow any conclusions to be drawn about the detected character, and emits a third acoustic and/or haptic signal after a touch input which was not recognized.

14. Method according to claim 13,
- wherein the second processor (10), after recognizing a swipe gesture (23), retains the previously selected invisible key (22), provided that on the on the invisible keyboard (20), in the direction analogous to the direction of the swipe gesture (23), no invisible key (21) is arranged next to the previously selected invisible key (22), and
- wherein the data processing unit (41) acknowledges this swipe gesture (23) with the output of the third acoustic and/or haptic signal or a fourth acoustic and/or haptic signal.

15. Method according to claim 12, 13 or 14,
- wherein the second processor (10) selects a predetermined key from among the invisible keys (21) as the selected invisible key (22) each time a character is detected.

16. Method according to claim 15,
- wherein the invisible keys (21) are arranged in four rows, wherein
- the digits 1, 2, 3 are assigned from left to right to three invisible keys (21) in the top line,
- the digits 4, 5, 6 are assigned from left to right to three invisible keys (21) in the second line,
- the digits 7, 8, 9 are assigned from left to right to three invisible keys (21) in the third row, and
- the digit 0 is assigned to an invisible key (21), which is located in a middle position in the bottom line, and
- wherein the processor or one of the processors (10, 11) selects the invisible key (21) to which the digit 5 is assigned as the selected invisible key (22) after each detection of a character.

17. Method according to claim 16,
- wherein the invisible key (21), to which the digit 0 is assigned, is selected by two successive downward swipe gestures (23), provided that the invisible key (21), to which the digit 5 is assigned, was previously selected.

18. Method according to any one of claims 12 to 17,
- wherein the swipe gestures (23) are horizontal and vertical swipe gestures, or horizontal, vertical and diagonal swipe gestures, and
- wherein the invisible keys (21) are arranged in a rectangular grid so that horizontal, vertical or diagonal neighbors of the selected invisible key (22) are clearly defined.

19. Method according to claim 12,
- wherein the second processor (10) in the protected input mode (51)
- transmits a notification via an external communication interface (100) after a touch input has been recognized by the first processor (11),
- stores captured characters in an internal security memory,
- encrypts characters with a cryptographic key,
- transmits the encrypted characters via the external communication interface (100), and
- suppresses the transmission of coordinates or vectors of touch inputs via the external communication interface (100), and
- wherein the second processor (10) in the plain text mode (52)
- transmits coordinates or vectors of touch inputs via the external communication interface (100).

20. Method according to claim 19,
wherein a data processing unit (41)
- switches the second processor (10) from plain text mode (52) to protected input mode (51) via the external communication interface (100),
- emits an acoustic or haptic signal on receipt of the notification via the external communication interface (100), and
- suppressed a screen output while the second processor (10) is in the protected input mode (51).

21. Method according to any one of claims 12 to 20,
wherein the tapping gesture (24) is a tap with two fingertips and
wherein after selecting the invisible key (22) and before recognizing the tapping gesture (24) and capturing the character
- a one-finger tapping gesture is recognized which is executed in the protected input mode (51) in any area on the touch-sensitive surface (44) of the operating element (43),
- the character assigned to the invisible key (22) selected at the time of the one-finger tap gesture is replaced by a character from a sequence of characters following subsequently the character,
- wherein these two steps are particularly repeated.

22. Computer-readable data carrier,
- on which a computer program is stored, which executes the method according to one of claims 12 to 21 by means of a user interface according to one of claims 1-10.

23. Computer program,
- which executes the method according to any one of claims 12 to 21 by means of a user interface according to any one of claims 1-10.

## Revendications

1. Interface utilisateur pour l'entrée protégée de caractères, avec un élément de commande (43), qui présente une surface d'affichage avec une surface sensible au toucher (44), et avec un premier processeur (11), qui est programmé pour la reconnaissance d'une entrée par contact, qui peut être exécutée comme geste d'effacement (23) dans une zone quelconque sur la surface sensible au toucher (44) de l'élément de commande (43),
dans lequel l'interface utilisateur comprend un second processeur (10) qui est adaptée pour commuter entre un mode de texte en clair (52) et un mode d'entrée protégé (51) et est en outre programmé pour fournir un clavier invisible (20) sur la surface d'affichage pendant le mode d'entrée protégé (51), dans lequel le clavier invisible (20) définit un ensemble de touches invisibles (21), dont une seule est sélectionnée à tout moment,
- dans lequel un caractère étant attribué à chacune des touches invisibles (21), lequel peut être saisi au moyen de la touche invisible (21) respective, et
- dans lequel, pendant le mode d'entrée protégé (51), aucune sortie visuelle ou sonore d'une position ou d'une occupation de la touche invisible sélectionnée (22) n'est prévue,
dans lequel le premier processeur (11) est programmé pour reconnaître l'entrée tactile , qui peut être exécutée sous la forme d'un geste de balayage (23) dans le mode d'entrée protégé (51),
dans lequel le deuxième processeur (10) est programmé pour sélectionner une touche invisible (21) qui est disposée dans une direction analogue à une direction du geste d'effacement (23) sur le clavier invisible (20) à côté de la touche invisible (22) précédemment sélectionnée, et
dans lequel le premier processeur (11) étant conçu pour reconnaître une entrée tactile qui peut être exécutée dans le mode d'entrée protégé (51) comme geste de frappe (24) dans une zone quelconque sur la surface sensible au toucher (44) de l'élément de commande (43), en ce que le deuxième processeur (10) est conçu pour détecter le caractère qui est attribué à la touche invisible (22) sélectionnée au moment du geste de frappe (24),
dans lequel l'élément de commande (43) traitant comme entrées tactiles des contacts avec un ou plusieurs bouts de doigts et les transmettant au premier processeur (11) sous forme de coordonnées ou de vecteurs dans un système de coordonnées, et
dans lequel l'interface utilisateur comprend un module de sécurité (42), dans lequel le premier processeur (11) est disposé dans un premier microcontrôleur avec une première interface de communication (110) qui relie l'élément de commande (43) au premier processeur (11), et dans lequel le deuxième processeur (10) est disposé dans un deuxième microcontrôleur avec une deuxième interface de communication (120) qui relie le premier processeur (11) au deuxième processeur (10),
dans lequel le second processeur (10) est adapté pour crypter des caractères saisis dans le mode d'entrée protégé (51) .

2. Interface utilisateur selon la revendication 1,
- avec une unité audio (14) et/ou un générateur de vibrations (13), et
- avec une unité de traitement de données (41) qui est programmée pour
- envoyer, pendant ou après le geste d'essuyage (23), un premier signal acoustique et/ou haptique qui ne permet pas de conclure sur la direction du geste d'essuyage (23),
- envoyer, pendant ou après le geste de frappe (24), un deuxième signal acoustique et/ou haptique qui ne permet pas de conclure sur le caractère saisi,
et
- envoyer un troisième signal acoustique et/ou haptique après une entrée tactile qui n'a pas été reconnue.

3. Interface utilisateur selon la revendication 2,
- dans lequel le deuxième processeur (10) est programmé pour maintenir la touche invisible (22) précédemment sélectionnée après la reconnaissance d'un geste d'effacement (23), dans la mesure où aucune touche invisible (21) n'est disposée sur le clavier invisible (20) à côté de la touche invisible (22) précédemment sélectionnée dans la direction analogue à la direction du geste d'effacement (23), et
- dans lequel l'unité de traitement de données (41) est programmée pour acquitter ce geste d'essuyage (23) par l'émission du troisième signal acoustique et/ou haptique ou d'un quatrième signal acoustique et/ou haptique.

4. Interface utilisateur selon la revendication 1, 2 ou 3,
- dans lequel le deuxième processeur (10) est programmé pour sélectionner, après chaque saisie d'un caractère, une touche prédéterminée de manière fixe parmi les touches invisibles (21) en tant que touche invisible sélectionnée (22) .

5. Interface utilisateur selon la revendication 4,
- dans lequel les touches invisibles (21) sont disposées en quatre lignes, où
- les chiffres 1, 2, 3 sont attribués de gauche à droite à trois touches invisibles (21) sur la ligne supérieure,
- les chiffres 4, 5, 6 sont attribués, de gauche à droite, à trois touches invisibles (21) sur la deuxième ligne,
- les chiffres 7, 8, 9 sont attribués, de gauche à droite, à trois touches invisibles (21) sur la troisième ligne, et
- le chiffre 0 est attribué à une touche invisible (21) qui se trouve dans une position centrale dans la ligne la plus basse, et
- dans lequel le processeur ou l'un des processeurs (10, 11) est programmé pour sélectionner, après chaque détection d'un caractère, la touche invisible (21) à laquelle le chiffre 5 est attribué, en tant que touche invisible sélectionnée (22).

6. Interface utilisateur selon la revendication 5,
- dans laquelle la touche invisible (21), à laquelle est attribué le chiffre 0, peut être sélectionnée par deux gestes de balayage (23) successifs vers le bas, à condition que la touche invisible (21), à laquelle est attribué le chiffre 5, ait été sélectionnée auparavant.

7. Interface utilisateur selon l'une des revendications précédentes,
- dans lequel les gestes de balayage (23) sont des gestes de balayage horizontal et vertical, ou des gestes de balayage horizontal, vertical et diagonal, et
- dans lequel les touches invisibles (21) sont disposées dans une grille rectangulaire, de sorte que les voisins horizontaux, verticaux ou diagonaux de la touche invisible (22) sélectionnée sont clairement déterminés.

8. Interface utilisateur selon la revendication 7,
dans laquelle le module de sécurité (42)
- comprend une interface de communication externe (100) qui est adaptée pour communiquer avec une unité de traitement de données (41),
- dans lequel le deuxième processeur (10), dans le mode d'entrée protégé (51), est adaptée pour
- envoyer une notification via l'interface de communication externe (100) après la détection d'une entrée tactile par le premier processeur (11),
- stockage des caractères saisis dans une mémoire de sécurité interne,
- cryptage de caractères saisis à l'aide d'une clé cryptographique,
- transmission des caractères cryptés via l'interface de communication externe (100), et
- la suppression de la transmission de coordonnées ou de vecteurs d'entrées tactiles via l'interface de communication externe (100), et
- dans lequel le deuxième processeur (10) est adaptée, dans le mode de texte en clair, (52) pour
- transmission de coordonnées ou de vecteurs d'entrées tactiles via l'interface de communication externe (100).

9. Interface utilisateur selon la revendication 8,
avec l'unité de traitement de données (41) qui est programmée
- pour faire passer le deuxième processeur (10) du mode texte clair (52) au mode d'entrée protégé (51) via l'interface de communication externe (100),
- pour émettre un signal acoustique ou haptique lors de la réception de la notification via l'interface de communication externe (100), et
- pour supprimer une sortie d'écran pendant que le second processeur (10) est dans le mode d'entrée protégé (51).

10. Interface utilisateur selon l'une des revendications précédentes, dans lequel le geste de frappe (24) étant une frappe du bout des deux doigts, et dans lequel le processeur ou les processeurs (10, 11) est/sont programmé(s) après la sélection de la touche invisible (22) et avant la reconnaissance du geste de frappe (24) et la détection du caractère
- pour la reconnaissance d'un geste de frappe à un doigt, qui peut être exécuté dans le mode de saisie protégé (51) dans une zone quelconque sur la surface sensible au toucher (44) de l'élément de commande (43),
- pour remplacer le caractère attribué à la touche invisible (22) sélectionnée au moment du geste de frappe à un doigt par un caractère suivant le caractère parmi une séquence de caractères,
- notamment pour répéter ces deux étapes.

11. Système d'accès, terminal libre-service, système de caisse, terminal de paiement, distributeur automatique de billets, terminal de transfert, distributeur de paquets, SmartPhone, tablette, ordinateur portable ou ordinateur personnel, qui comprend l'interface utilisateur selon l'une quelconque des revendications 1 à 10.

12. Procédure de saisie protégée des caractères,
- dans lequel un élément de commande (43) présente une surface d'affichage avec une surface sensible au toucher (44), et
- dans lequel, au moyen d'un premier processeur (11),
- reconnaître une entrée tactile qui est exécutée sous la forme d'un geste d'effacement (23) dans une zone quelconque sur la surface (44) sensible au toucher de l'élément de commande (43),
dans lequel, au moyen d'un deuxième processeur (10), est exécuté pour une commutation entre un mode de texte clair (52) et un mode d'entrée protégé (51), et
- un clavier invisible (20) est fourni sur la surface d'affichage pendant le mode d'entrée protégé (51), définissant un ensemble de touches invisibles (21), dont une seule est sélectionnée à tout moment,
- dans lequel, un caractère étant attribué à chacune des touches invisibles (21), lequel peut être saisi au moyen de la touche invisible (21) respective, et
- dans lequel, pendant un mode d'entrée protégé (51), il n'y a pas de sortie visuelle ou sonore d'une position ou d'une occupation de la touche invisible sélectionnée (22),
dans lequel, au moyen du premier processeur (11), une entrée tactile étant détectée, laquelle est transmise dans le mode de protection mode de saisie (51) comme un geste d'effacement (23) dans une zone quelconque de l'écran tactile. zone sur la surface sensible au toucher (44) de l'élément de commande (43),
dans lequel, au moyen du deuxième processeur (10), une touche invisible (21) est sélectionnée, laquelle est disposée dans une direction analogue à une direction du geste de balayage (23) sur le clavier invisible (20) à côté de la touche invisible (22) précédemment sélectionnée,
dans lequel, au moyen du premier processeur (11), une entrée tactile étant reconnue, laquelle est exécutée dans le mode d'entrée protégé (51) comme geste de frappe (24) dans une zone quelconque sur la surface sensible au toucher (44) de l'élément de commande (43), et
dans lequel, au moyen du deuxième processeur (10), on détecte le caractère qui est attribué à la touche invisible (22) sélectionnée au moment du geste de frappe (24),
en ce que l'élément de commande (43) est un champ tactile ou un écran tactile, des contacts avec un ou plusieurs bouts de doigts étant traités comme entrées de contact au moyen de l'élément de commande (43) et étant transmis au premier processeur (11) sous forme de coordonnées ou de vecteurs dans un système de coordonnées, et
dans lequel l'interface utilisateur comprend un module de sécurité (42) dans lequel le premier processeur (11) est disposé dans un premier microcontrôleur avec une première interface de communication (110) qui connecte l'élément de commande (43) au premier processeur (11), et dans lequel le deuxième processeur (10) est disposé dans un deuxième microcontrôleur avec une deuxième interface de communication (120) qui connecte le premier processeur (11) au deuxième processeur (10),
dans lequel le second processeur (10) est exécuté dans le mode d'entrée protégé (51) pour un cryptage de caractères saisis.

13. Procédé selon la revendication 12,
- dans lequel une unité de traitement de données (41) émet, au moyen d'une unité audio (14) et/ou d'un générateur de vibrations (13), pendant ou après le geste d'essuyage (23), un premier signal acoustique et/ou haptique qui ne permet pas de déduire la direction du geste d'essuyage (23),
- pendant ou après le geste de frappe (24), émet un deuxième signal acoustique et/ou haptique qui ne permet pas de conclure sur le caractère saisi, et après une saisie tactile qui n'a pas été reconnue, émet un troisième signal acoustique et/ou haptique.

14. Procédé selon la revendication 13,
- dans lequel le deuxième processeur (10), après avoir reconnu un geste de balayage (23), conserve la touche invisible (22) précédemment sélectionnée, à condition que sur le clavier invisible (20), dans la direction analogue à la direction du geste de balayage (23), aucune touche invisible (21) ne soit disposée à côté de la touche invisible (22) précédemment sélectionnée, et
- dans lequel l'unité de traitement de données (41) confirme ce geste de balayage (23) par l'émission du troisième signal acoustique et/ou haptique ou d'un quatrième signal acoustique et/ou haptique.

15. Procédé selon la revendication 12, 13 ou 14,
- dans lequel le deuxième processeur (10) sélectionne, après chaque détection d'un caractère, une touche prédéterminée fixe parmi les touches invisibles (21) en tant que touche invisible sélectionnée (22).

16. Procédé selon la revendication 15,
- dans lequel les touches invisibles (21) sont disposées en quatre lignes, où
- les chiffres 1, 2, 3 sont attribués de gauche à droite à trois touches invisibles (21) sur la ligne supérieure,
- les chiffres 4, 5, 6 sont attribués, de gauche à droite, à trois touches invisibles (21) sur la deuxième ligne,
- les chiffres 7, 8, 9 sont attribués de gauche à droite à trois touches invisibles (21) sur la troisième ligne, et
- le chiffre 0 est attribué à une touche invisible (21) qui se trouve dans une position centrale dans la ligne la plus basse, et
- dans lequel le processeur ou l'un des processeurs (10, 11) sélectionne, après chaque détection d'un caractère, la touche invisible (21) à laquelle le chiffre 5 est attribué, en tant que touche invisible sélectionnée (22).

17. Procédé selon la revendication 16,
- dans lequel la touche invisible (21), à laquelle est attribué le chiffre 0, est sélectionnée par deux gestes de balayage (23) successifs vers le bas, à condition que la touche invisible (21), à laquelle est attribué le chiffre 5, ait été sélectionnée auparavant.

18. Procédé selon l'une quelconque des revendications 12 à 17,
- dans lequel les gestes de balayage (23) sont des gestes de balayage horizontal et vertical, ou des gestes de balayage horizontal, vertical et diagonal, et
- dans lequel les touches invisibles (21) sont disposées dans une grille rectangulaire, de sorte que les voisins horizontaux, verticaux ou diagonaux de la touche invisible (22) sélectionnée sont clairement déterminés.

19. Procédé selon la revendication 12,
- dans lequel le deuxième processeur (10) est dans le mode d'entrée protégé (51)
- envoie une notification via une interface de communication externe (100) après une détection d'une entrée tactile par le premier processeur (11),
- stocke les caractères saisis dans une mémoire de sécurité interne,
- crypte les caractères à l'aide d'une clé cryptographique,
- transmet les caractères cryptés via l'interface de communication externe (100), et
- supprime la transmission de coordonnées ou de vecteurs d'entrées d'orientation via l'interface de communication externe (100), et
- dans lequel le deuxième processeur (10) est en mode texte clair (52)
- transmet les coordonnées ou les vecteurs des entrées tactiles via l'interface de communication externe (100).

20. Procédé selon la revendication 19,
dans lequel une unité de traitement de données (41)
- fait passer le deuxième processeur (10) du mode texte clair (52) au mode entrée protégée (51) via l'interface de communication externe (100),
- émet un signal acoustique ou haptique à la réception de la notification via l'interface de communication externe (100), et
- supprime une sortie d'écran pendant que le deuxième processeur (10) est en mode de saisie protégée (51).

21. Procédé selon l'une quelconque des revendications 12 à 20, le geste de frappe (24) étant une frappe avec deux bouts de doigts, et
dans lequel, après la sélection de la touche invisible (22) et avant la reconnaissance du geste de frappe (24) et la détection du caractère
- un geste de frappe d'un seul doigt est reconnu, qui est exécuté dans le mode de saisie protégé (51) dans une zone quelconque sur la surface sensible au toucher (44) de l'élément de commande (43),
- le caractère attribué à la touche invisible (22) sélectionnée au moment de la frappe à un doigt est remplacé par un caractère qui suit le caractère dans une séquence de caractères,
- en particulier, ces deux étapes doivent être répétées.

22. Support de données lisible par ordinateur,
- sur lequel est stocké un programme d'ordinateur qui exécute le procédé selon l'une des revendications 12 à 21 au moyen d'une interface utilisateur selon l'une des revendications 1 à 10.

23. Programme informatique,
- qui exécute le procédé selon l'une des revendications 12 à 21 au moyen d'une interface utilisateur selon l'une des revendications 1 à 10.
